(19) Europäisches Patentamt / European Patent Office / Office européen des brevets

(11) **EP 2 616 832 B1**

(12) **FASCICULE DE BREVET EUROPEEN**

(45) Date de publication et mention de la délivrance du brevet:
**29.10.2014 Bulletin 2014/44**

(21) Numéro de dépôt: **11746558.3**

(22) Date de dépôt: **22.08.2011**

(51) Int Cl.:
**G01S 5/02** *(2010.01)*      **H04W 64/00** *(2009.01)*

(86) Numéro de dépôt international:
**PCT/EP2011/064393**

(87) Numéro de publication internationale:
**WO 2012/034830 (22.03.2012 Gazette 2012/12)**

(54) **PROCEDE ET DISPOSITIF DE LOCALISATION COOPERATIVE D'EMETTEURS ET/OU RECEPTEURS COMPRIS PAR UN CORPS MOBILE**

VERFAHREN UND VORRICHTUNG ZUR KOOPERATIVEN ORTUNG VON SENDERN UND/ODER EMPFÄNGERN AUF EINEM MOBILEN KÖRPER

METHOD AND APPARATUS FOR THE COOPERATIVE LOCALIZATION OF TRANSMITTERS AND/OR RECEIVERS ON A MOBILE BODY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.09.2010  FR 1057424**

(43) Date de publication de la demande:
**24.07.2013  Bulletin 2013/30**

(73) Titulaire: **Commissariat à l'Énergie Atomique et aux Énergies Alternatives
75015 Paris (FR)**

(72) Inventeurs:
• **BEN HAMIDA, Elyes
  F-38000 Grenoble (FR)**
• **DENIS, Benoît
  F-38000 Grenoble (FR)**
• **OUVRY, Laurent
  F-38420 Le Versoud (FR)**

(74) Mandataire: **Labatte, Laurent et al
Marks & Clerk France
Immeuble Visium
22, avenue Aristide Briand
94117 Arcueil Cedex (FR)**

(56) Documents cités:
EP-A1- 1 760 487      EP-A2- 1 617 601
WO-A1-2009/078509     US-A1- 2005 143 101
US-A1- 2006 267 841   US-A1- 2008 102 855
US-A1- 2009 046 005   US-A1- 2009 209 268

**Description**

La présente invention concerne un procédé et un dispositif de localisation coopérative d'émetteurs et/ou récepteurs compris par un corps mobile. L'invention s'applique notamment à la capture de mouvements, à la localisation de personnes, au déploiement automatique de réseaux corporels, ou encore à l'aide à la navigation.

Avec les récentes avancées technologiques en matière d'intégration et de miniaturisation, et grâce au développement de technologies de communication sans fil bas débit et très basse consommation, un nouveau champ applicatif a émergé sous le nom de réseaux corporels sans fils ou BAN, acronyme anglo-saxon pour « Body Area Networks ». Par la suite les termes de « réseau corporel » et de « BAN » seront employés indifféremment l'un pour l'autre. Dans ce type d'application, des éléments d'émission et/ou de réception sans fil ont vocation à former un réseau sur ou à grande proximité d'un corps humain. Des d'applications connues de ces réseaux sont notamment le « terminal éclaté » (comportant écrans, claviers, et oreillettes non co-localisés), les équipements sportifs (cardio-fréquencemètre, montre, podomètre sur une chaussure) ou les équipements médicaux (monitoring nomade de l'activité cardiaque, cérébrale et musculaire, par exemple).

La localisation des dispositifs sans fil constituant un BAN trouve un intérêt dans de nombreuses applications telles que :

- la navigation de groupes de personnes mobiles en environnements intérieurs et les services géo-localisés ;
- la capture de mouvement, par exemple, pour le suivi du geste sportif ou pour des applications de divertissement et de jeux ;
- la détection de posture, par exemple, pour la rééducation, le suivi de personnes vulnérables ou âgées, et la surveillance de personnes évoluant dans un environnement sinistré, par exemple des pompiers évoluant à l'intérieur d'un bâtiment en feu.

La radiolocalisation a été étudiée dans le contexte des réseaux personnels sans-fil ou WPANs (« Wireless Personal Area Networks ») et des réseaux de capteurs ou WSN (« Wireless Sensor Networks ») et de multiples solutions de localisation coopérative ont été proposées comme alternatives ou compléments aux systèmes de localisation par satellite. On peut notamment citer la publication de N. Patwari, J.N. Ash, S. Kyperountas, A.O. Hero, R.L. Moses, et N.S. Correal, "Locating the nodes: coopérative localization in wireless sensor Networks," Signal Processing Magazine, IEEE, vol. 22, Juillet 2005, pp. 54-69. Ces solutions de localisation se basent généralement sur des mesures de distance entre chaque paire de noeuds, et permettent d'estimer les positions, relatives ou absolues, de chaque noeud.

Plus récemment, des techniques ont été proposées pour traiter le problème de la localisation dans le cadre des réseaux corporels sans fil ou WBANs.

Ainsi, dans la méthode proposée par C.P. Figueiredo, N.S. Dias, et P.M. Mendes, "3D localization for biomedical wireless sensor networks using a microantenna," Wireless Technology, 2008. EuWiT 2008. European Conference on, 2008, pp. 45-48, les auteurs s'intéressent au problème de la localisation d'électrodes positionnées sur un corps. La méthode proposée se base sur l'utilisation d'une technologie radio à faible fréquence, pour mieux faire face aux atténuations causées par le corps, ainsi que l'utilisation d'un algorithme de positionnement appelé SPA (pour Self Positioning Algorithm en anglais). Cet algorithme se base sur les mesures de distance entre les différentes électrodes, obtenues grâce à la métrique du RSSI (pour Receive Signal Strength Indicator en anglais) et l'utilisation d'une micro-antenne MEMS (pour Micro Electrical Mechanical Systems en anglais) de type cantilever. A partir des mesures obtenues, l'algorithme SPA estime, au moyen de la méthode des moindres des carrés (ou Least square en anglais), la position de chacune des électrodes dans un système de coordonnée virtuel. Toutefois, cette méthode met en oeuvre des mesures de distance exhaustives entre chaque paire d'objets. De plus, le positionnement est purement virtuel et se limite à des applications de type auto-organisation et auto-découverte de la topologie réseau. Enfin, cette méthode se base sur la métrique, peu précise, du RSSI.

Dans C. Guo, J. Wang, R.V. Prasad, et M. Jacobsson, "Improving the Accuracy of Person Localization with Body Area Sensor Networks: An Experimental Study," Consumer Communications and Networking Conference, 2009. CCNC 2009. 6th IEEE, 2009, pp. 1-5, les auteurs proposent et évaluent expérimentalement une méthode de localisation de réseaux corporels sans fil en environnement intérieur. Puisque les antennes ne sont généralement pas parfaitement omnidirectionnelles, les auteurs proposent l'idée de distribuer plusieurs objets sans fil sur le corps, afin d'exploiter la diversité spatiale et améliorer ainsi la précision de la localisation. Des mesures de distance sont obtenues entre chaque objet du réseau corporel sans fil et des équipements extérieurs (appelés également ancres) grâce à la métrique du RSSI (pour Receive Signal Strength Indicator en anglais). Puisque plusieurs valeurs de RSSI sont obtenues pour un même réseau corporel, deux méthodes de positionnement sont alors proposées. La première méthode se base sur le calcul d'une valeur RSSI moyenne pour l'ensemble du réseau corporel. La deuxième méthode se base sur le calcul d'une position moyenne obtenue à partir des différentes positions estimées par chacun des objets sans fil. Cependant, même si cette solution exploite la diversité spatiale, en distribuant plusieurs objets sans fil sur une personne, le schéma de coopération est limité puisque les mesures de distance ne sont effectuées qu'entre les objets et des ancres, ce qui peut conduire à une précision et/ou une couverture insuffisante.

Dans H. Ren, M.Q. Meng, et L. Xu, "Indoor Patient Position Estimation Using Particle Filtering and Wireless Body Area Networks," Engineering in Medicine and Biology Society, 2007. EMBS 2007. 29th Annual International Conférence of the IEEE, 2007, pp. 2277-2280, les auteurs proposent une technique de positionnement de réseaux corporels ou BANs, où chaque BAN est constitué d'un seul noeud sans fil. Cette technique se base sur la métrique du RSSI et l'utilisation d'un filtre particulier qui permet de combiner : 1) les mesures de RSSI obtenues à partir d'ancres ou d'autres BANs à portée de communication ; ainsi que 2) les puissances de transmission correspondantes, pour estimer la position de chaque réseau corporel sans fil. Cependant, les BANs ne sont constitués, dans cette méthode, que d'un seul noeud sans fil, ce qui ne permet pas de mettre en oeuvre des schémas de coopération complexes. Enfin, la métrique utilisée (RSSI) est peu précise.

Dans C. Lee, H. Lee, et J. Kim, "Performance of a one-way ranging method for WBAN healthcare services," Communications and Information Technology, 2009. ISCIT 2009. 9th International Symposium on, 2009, pp. 1460-1463, les auteurs évaluent les performances d'une technique de localisation qui se base sur la métrique du TDOA (pour Time Différence Of Arrival en anglais) et un échange de type 1-way ranging entre un réseau corporel constitué d'un seul noeud sans fil et un ensemble d'ancres dont les positions sont connues. La méthode des moindres carrés est alors utilisée pour estimer la position de chaque réseau corporel. Toutefois, cette solution ne met pas en oeuvre de schémas coopératifs lors de la localisation.

Dans F. Chiti, R. Fantacci, F. Archetti, E. Messina, et D. Toscani, "An Integrated Communications Framework for Context Aware Continuous Monitoring with Body Sensor Networks", IEEE Journal on Selected Areas in Communications, Vol. 27, No. 4, mai 2009, les auteurs proposent un « framework » pour le support d'applications médicales. Ce système se base sur un réseau corporel sans fil, composé de plusieurs objets et un noeud CH (pour Cluster Head en anglais), et un réseau de capteurs déployé au niveau de l'environnement immédiat. Ce réseau de capteurs est principalement utilisé par le noeud CH pour pouvoir échanger des informations médicales et se localiser. La localisation s'effectue grâce à l'estimation de la métrique DoA (pour Direction of Arrival en anglais) entre le noeud CH et les noeuds du réseau de capteurs. Ces mesures de DoA combinées aux puissances de transmissions sont alors utilisées par un algorithme, se basant sur les filtres particulaires et les réseaux bayésiens dynamiques, pour l'estimation de la position du noeud CH. Cependant, là encore, cette technique n'exploite pas les spécificités des réseaux corporels. En effet, seul l'un des noeuds du BAN (le cluster head) interagit avec l'infrastructure (réseaux de capteurs dans le cas actuel) pour pouvoir se localiser. Aucun schéma de coopération de type Intra ou Inter BANs n'est utilisé.

De plus, la mesure de distance se base sur la métrique du RSSI et de la direction d'arrivée.

Certaines techniques abordent la localisation coopérative dans les réseaux sans fil et plus particulièrement la localisation, le suivi et la capture de mouvement de réseaux corporels sans fil ou de noeuds placés sur un corps humain.

Une première série de techniques s'attache principalement à la problématique de la localisation coopérative de terminaux mobiles ou stationnaires dans un réseau sans fil. On peut notamment citer la demande de brevet américain référencée sous le numéro de publication US 2008/0268873, la demande de brevet internationale publiée sous le numéro WO 2004/095714, la demande de brevet européen EP 1 207 404, et les demandes de brevet américain publiées sous les numéros US 2007/0225016, US 2008/0232281, et US 2002/0055362. Les schémas coopératifs proposés se basent principalement sur, d'une part, des communications radio entre les terminaux et des ancres (ou stations de base) dont les positions sont connues, et d'autre part, des communications radio entre les différentes terminaux. Un tel système est aussi connu par US 2009/0.209.268 qui est utilisé pour rédigée la revendication en deux parties.

Une seconde série de techniques s'attache plus particulièrement à la problématique du positionnement et/ou du suivi de personnes en environnement intérieur et/ou extérieur, ainsi qu'à la capture de mouvements au moyen de dispositifs placés sur un corps.

Ainsi, les techniques présentées dans les demandes de brevet internationales publiées sous les numéros WO 2008/143379 et WO 2005/096568 mettent en oeuvre des méthodes de suivi et de localisation non-coopérative. Le suivi d'une personne sous surveillance, en environnement extérieur, s'effectue grâce à un module GPS et GSM disposé sur un corps. En environnement intérieur, le positionnement est réalisé grâce à un module radio disposé sur une personne et qui communique avec une station de base reliée au réseau local. Cependant, ces techniques ne permettent généralement pas d'obtenir une localisation précise et/ou une bonne couverture de localisation.

La technique présentée dans la demande de brevet US 2008/0077326 consiste en un système et une méthode permettant la localisation et le suivi de personnes intervenant sur des sites à risques où le GPS n'est pas disponible. Chaque personne (ou BAN) est équipée, entre autre, d'un module radio pour pouvoir communiquer avec les stations de base ou les autres personnes à proximité géographique. Des mesures de distance, entre les BANs et vers les ancres, sont effectuées grâce à la métrique du RSSI et permettent de localiser et de suivre le déplacement de personnes à l'intérieur de la zone sinistrée.

La méthode présentée dans la demande de brevet américain US 2008/0223131 utilise un système à base d'ultra-sons pour la capture de mouvement d'une personne ou objet mobile. Une personne est équipée d'émetteurs et de récepteurs à ultra-sons, qui sont eux même reliés par câble à un équipement central. Des mesures de distance sont obtenues grâce à des échanges entre les émetteurs et récepteurs. Ces mesures sont par la suite raffinées avec des données issues de capteurs inertiels, permettant ainsi au final de capturer les mouvements de la personne ou de détecter certaines postures. Toutefois, cette méthode présentée procède à des mesures de distance de manière exhaustive, ce qui nécessite un grand nombre de transmissions de signaux. Par ailleurs, cette méthode s'avère parfois insuffisante en termes de couverture et/ou de précision.

L'invention présentée dans la demande de brevet internationale publiée sous le numéro WO 2007/093641 porte sur un système autonome de détermination d'informations représentatives du mouvement d'une chaîne articulée comprenant au moins deux éléments solides et au moins une articulation reliant lesdits deux éléments. Le système comprend au moins deux dispositifs de mesure de distances inter-dispositifs, montés fixement sur deux éléments distincts de ladite chaîne articulée et adaptés pour transmettre les mesures effectuées. En outre, le système comprend des moyens de calculs, montés sur ladite chaîne articulée, adaptés pour calculer des informations représentatives du mouvement de ladite chaîne articulée à partir des mesures. Toutefois, ce système se focalise sur la distance directe inter-dispositifs, le système comporte une contrainte en ce que les dispositifs sont placés à des endroits bien spécifiques pour déterminer le mouvement d'articulations, et il se limite à des applications de capture ou de reproduction de mouvements.

Ainsi, dans le contexte des applications de localisation de réseaux corporels sans fil, la majorité des solutions existantes se base sur des réseaux composés d'un seul objet sans fil ainsi que sur des schémas de coopération assez simples. En effet, la coopération entre les objets d'un même réseau BAN (coopération intra-BAN) est inexistante, et la coopération entre différents réseaux BANs (coopération inter-BAN) se limite à des mesures de distance entre deux objets sans fil, qui sont généralement choisis comme étant des noeuds coordinateurs ou cluster head.

Par ailleurs, dans le contexte d'applications de type auto-organisation ou capture de mouvement, les schémas de coopération se basent sur la réalisation de mesures de distance exhaustives entre chaque paire d'objets sans fil d'un même BAN. La coopération inter-BAN est en outre inexistante et le positionnement de ces objets est généralement de type virtuel.

En définitive, il apparaît après analyse que la majorité des solutions proposées dans le contexte de la localisation, l'auto-organisation ou la capture de mouvement de réseaux corporels sans fil, ne mettent en oeuvre que des schémas de coopération Inter-BANs assez simplistes (par exemple, une mesure de distance entre seulement deux noeuds) ou des schémas de coopération Intra-BAN avec des mesures de distance exhaustives sans aucune considération pour les aspects performances de la couche MAC. En outre, aucune des solutions déjà existantes ne permet de combiner simultanément différents types de mesures Intra-BAN, Inter-BANs et Ancres-BANs.

Un but de l'invention est de proposer un procédé pour localiser de manière fiable et précise des dispositifs émetteurs et/ou récepteurs disposés sur un corps mobile, par exemple un corps vivant mobile articulé, tel qu'un corps humain ou animal, ou un corps inorganique, tels qu'un robot ou un véhicule autoguidé. A cet effet, l'invention a pour objet un procédé de localisation coopérative d'une pluralité de noeuds compris par un premier corps mobile comprenant plusieurs noeuds aptes à émettre et/ou recevoir un signal par des moyens sans fil, le procédé étant caractérisé en ce qu'il comprend, pour au moins un premier noeud parmi lesdits noeuds, une étape de mesures de distances séparant ledit premier noeud de deuxièmes noeuds en utilisant lesdits moyens sans fil, chacun desdits deuxièmes noeuds étant compris par l'une des entités suivantes de type distincts, au choix :

- le premier corps mobile,
- un équipement fixe distant et situé à portée de transmission dudit corps mobile,
- un deuxième corps mobile distant et situé à portée de transmission du premier corps mobile,

au moins deux noeuds parmi tous lesdits deuxièmes noeuds utilisés pour effectuer lesdites mesures de distance étant compris par deux entités de types distincts et/ou par ledit deuxième corps mobile, le procédé comprenant une étape d'exploitation desdites mesures pour localiser au moins ledit premier noeud au moins relativement à un sous-ensemble desdits deuxièmes noeuds, le procédé comprenant en outre une étape de localisation d'au moins un autre desdits noeuds compris par le corps en exploitant au moins une mesure de distance séparant cet autre noeud d'un troisième noeud, ce troisième noeud pouvant être ledit premier noeud.

Le procédé selon l'invention permet de mobiliser un certain nombre de liens sans fils, par exemple basés sur la technologie radio Ultra Large Bande (UWB), et de mesures de distances (grâce à des schémas coopératifs non présents dans l'état de l'art) à toute(s) fin(s) utiles pour la localisation, au sens le plus générique du terme (c'est à dire le positionnement relatif, le positionnement absolu, ou pour obtenir une simple information de distance relative supplémentaire).

Les objets sans fil placés sur le corps mobile communiquent de préférence par radiofréquences, mais des liaisons acoustiques ou optiques sont également possibles. Dans le cas de l'UWB, la métrique radio qui est exploitée pour l'estimation d'une distance séparant une paire d'entités communicantes, est le temps de vol ou TOF (pour Time Of Flight en anglais). Ce temps de vol, combiné à la connaissance de la célérité des ondes électromagnétiques dans l'air permet de déterminer la distance entre ces deux entités. L'exploitation de ces mesures de distance par des algorithmes permet d'estimer la position absolue ou relative des objets sur un corps et, in fine, la position globale d'un corps dans un environnement intérieur. Si la technologie UWB et les métriques de type TOF apparaissent comme des moyens préférentiels pour l'invention, il est à noter que d'autres métriques de radiolocalisation, s'appuyant par exemple sur la puissance reçue du signal (RSSI) pour des technologies radio bande-étroite (comme par exemple Zigbee) peuvent également être appliquées.

Selon une mise en oeuvre du procédé de localisation coopérative selon l'invention, une première étape est exécutée pour mesurer des distances entre le premier noeud et des deuxièmes noeuds déjà positionnés et compris par des entités distantes du premier corps mobile, une deuxième étape étant exécutée pour estimer la position dudit premier noeud à partir desdites mesures, une troisième étape étant exécutée si la position dudit premier noeud n'a pas pu être déterminée selon la précision souhaitée à l'issue de la deuxième étape, la troisième étape comprenant au moins une mesure de distance entre le premier noeud et au moins un autre noeud compris par le premier corps mobile et positionné à l'issue de la première étape, la position dudit premier noeud étant alors estimée à partir des mesures de distances issues de la première étape et de la troisième étape. Cette mise en oeuvre, permet d'économiser de l'énergie lorsque la troisième étape n'est pas exécutée. Les mesures de distance sont sélectives, de manière à limiter l'utilisation des ressources de calculs. Autrement dit, seuls les noeuds dont on a pas réussi à déterminer une position, de manière non coopérative, mettent en oeuvre des mesures de distance vers les autres objets déjà positionnés.

Selon une autre mise en oeuvre du procédé de localisation coopérative selon l'invention, une première étape comprend la prise de mesures de distances entre le premier noeud et des deuxièmes noeuds, au moins un deuxième noeud étant compris par le premier corps mobile, au moins un autre deuxième noeud étant compris par une entité distante du premier corps mobile, le procédé exécutant une deuxième étape pour estimer la position du premier noeud à partir desdites mesures de distances. Cette mise en oeuvre privilégie l'obtention d'une localisation précise. Dans ce cas, toutes les mesures inter-BAN, intra-BAN et ancre-BAN sont utilisées concomitamment.

Selon une autre mise en oeuvre du procédé de localisation coopérative selon l'invention, on effectue au moins une mesure de temps de vol d'un trajet indirect de signal ultra large bande transmis entre le premier noeud et un deuxième noeud, ledit trajet étant issu d'une unique réflexion, entre le premier noeud et le deuxième noeud, sur une surface externe au corps comprenant le premier noeud, le deuxième noeud étant compris, au choix, par :

○ le premier corps mobile;

○ un équipement fixe distant et situé à portée de transmission dudit corps mobile ;

○ un deuxième corps mobile distant et situé à portée de transmission du premier corps mobile ;

exploiter ladite mesure de temps de vol pour localiser le premier noeud au moins par rapport au deuxième noeud. Cette mise en oeuvre du procédé selon l'invention permet de faire bénéficier au système de localisation de mesures supplémentaires liées à des réflexions, par exemple des réflexions sur le sol.

Selon une autre mise en oeuvre du procédé de localisation coopérative selon l'invention, les mesures de distances sont effectuées par mesure du temps d'arrivée d'un signal transmis entre le premier noeud et un deuxième noeud, le premier noeud et le deuxième noeud étant synchronisés, ou d'un échange de signaux transmis entre le premier noeud et un deuxième noeud, le premier noeud et le deuxième noeud étant asynchrones. Cette métrique présente notamment l'avantage de la précision.

L'invention concerne également un procédé de localisation coopérative d'un corps mobile, le procédé comprenant, pour plusieurs noeuds dudit corps, une première étape d'exécution du procédé de localisation coopérative de noeud tel que décrit plus haut pour estimer la position desdits noeuds, et une deuxième étape d'exploitation desdites positions pour localiser ledit corps mobile. Par exemple, la position du corps mobile peut être le résultat d'une combinaison des positions des noeuds. Le procédé selon l'invention permet ainsi de réutiliser, par exemple, un réseau de capteurs corporels déjà existant pour déterminer la position de noeuds.

L'invention concerne également un système apte à la mise en oeuvre du procédé de localisation coopérative de noeud tel que décrit plus haut, le système comprenant un premier corps mobile comprenant plusieurs noeuds parmi lesquels au moins un noeud est apte à émettre des signaux, par exemple un émetteur radiofréquence ultra large bande, ledit noeud étant à portée de transmission d'au moins un deuxième noeud comprenant un récepteur apte à recevoir les signaux émis par ledit émetteur, le premier corps mobile comprenant des moyens de calcul d'une position du noeud émetteur.

Selon un autre mode de réalisation, le système apte à la mise en oeuvre du procédé de localisation coopérative de noeud tel que décrit plus haut, le système comprend un premier corps mobile comprenant plusieurs noeuds parmi lesquels au moins un noeud est apte à recevoir des signaux, par exemple un récepteur radiofréquence ultra large bande, ledit noeud étant à portée de transmission d'au moins un deuxième noeud comprenant un émetteur de signaux, le système comprenant des moyens de calcul de la position du noeud récepteur.

Le procédé selon l'invention peut faire l'objet de multiples applications. Il permet de déterminer la position de plusieurs noeuds d'un BAN, par rapport à un référentiel local associé au BAN, par rapport à un référentiel lié à une infrastructure environnante ou par rapport à un référentiel lié à un autre BAN évoluant à proximité géographique du premier BAN. Il peut aider à la navigation de groupes de BAN mobiles, permettre une auto-organisation, une auto-configuration des noeuds en fonction de la position, relative ou absolue, de chaque noeud par rapport aux autres. Le procédé selon l'invention peut être utilisé pour contrôler l'intégrité d'un réseau corporel ou encore détecter certaines postures d'un corps humain. Plus généralement, il peut être employé pour reconstituer le mouvement du corps humain ou de certains membres, éventuellement en étant aidé par des capteurs de type inertiels, ces capteurs pouvant être déjà intégrés dans les noeuds du réseau corporel.

D'autres caractéristiques apparaîtront à la lecture de la description détaillée donnée à titre d'exemple et non limitative qui suit faite en regard de dessins annexés qui représentent :

- la figure 1a, un exemple de dispositif selon l'invention dans un contexte d'utilisation ;
- la figure 1b, un schéma présentant l'architecture d'un dispositif selon l'invention ;
- la figure 2, un synoptique présentant les étapes d'un procédé selon l'invention ;
- la figure 3a, un exemple de réseau corporel (BAN) selon l'art antérieur ;
- la figure 3b, une illustration de l'emploi d'ancres virtuelles au sein d'un BAN du dispositif selon l'invention ;
- la figure 4a, un exemple de coopération simple de type « 1-vers-1 » entre deux BAN situés sur des corps mobiles distincts ;
- les figures 4b, 4c, des exemples d'utilisation de liens coopératifs entre plusieurs BAN situés sur des corps mobiles distincts (coopération inter-BAN « 1-vers-N » Fig. 4b et « N-vers-N » Fig. 4c) ;

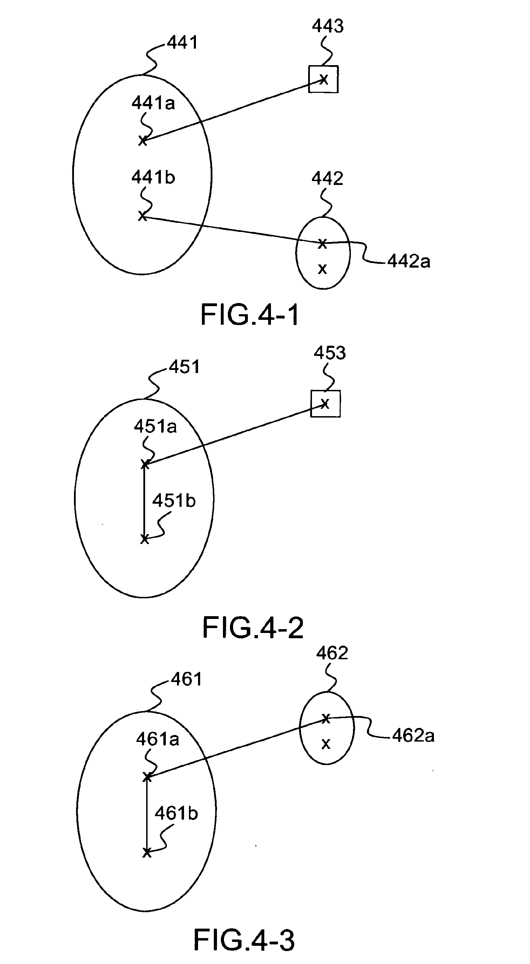

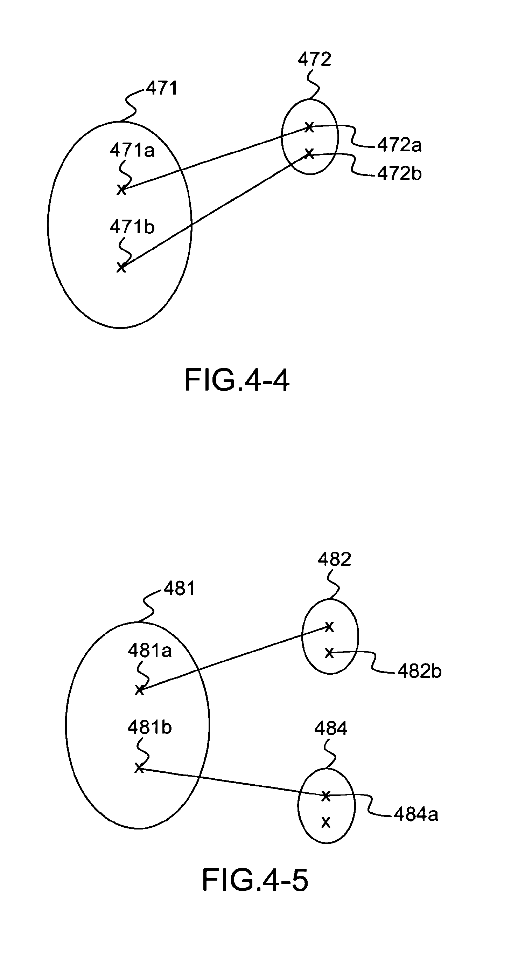

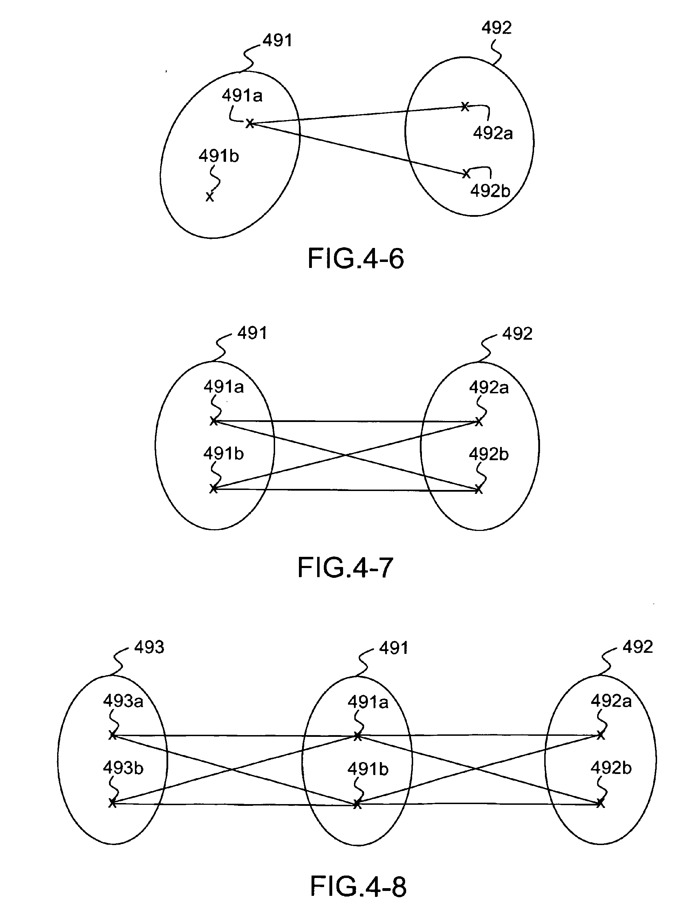

- les figures 4-1, 4-2, 4-3, 4-4, 4-5, 4-6, 4-7, 4-8 des schémas illustrant plusieurs configurations possibles du dispositif selon l'invention,

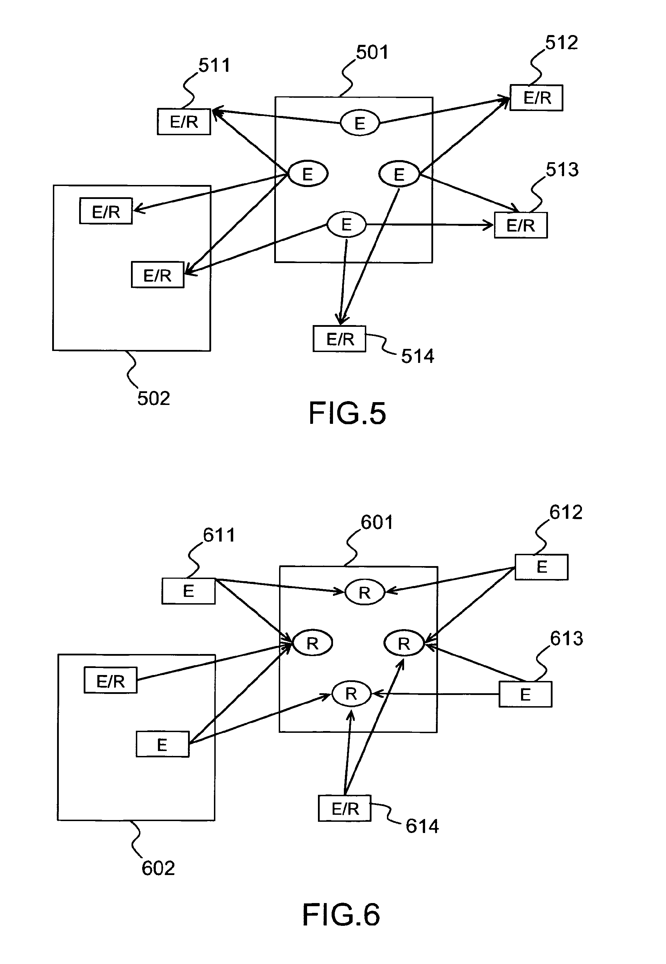

- la figure 5, un premier mode de réalisation d'un dispositif selon l'invention ;
- la figure 6, un deuxième mode de réalisation d'un dispositif selon l'invention ;

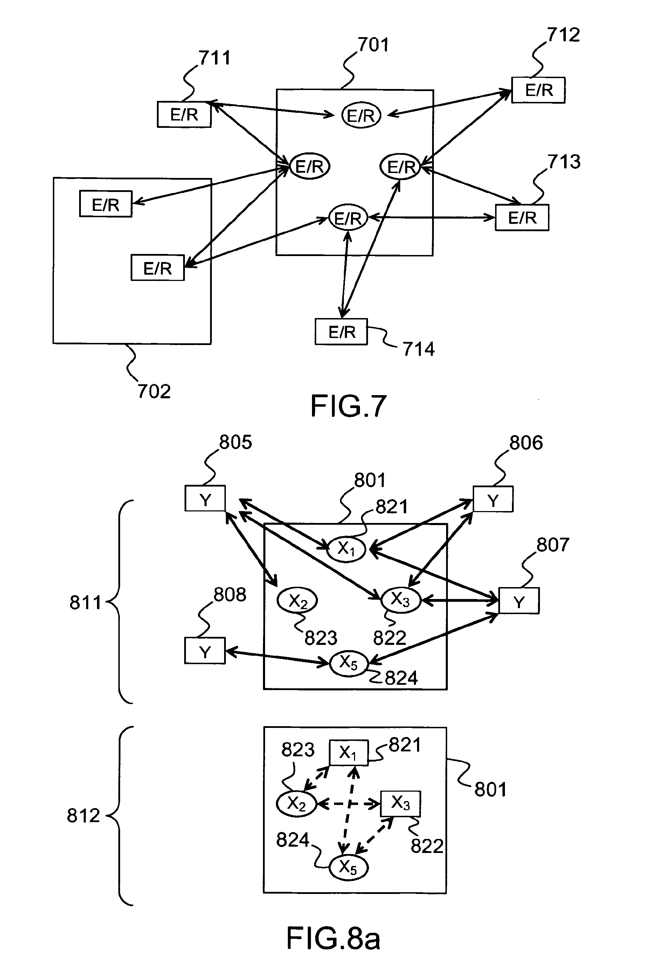

- la figure 7, un troisième mode de réalisation d'un dispositif selon l'invention ;

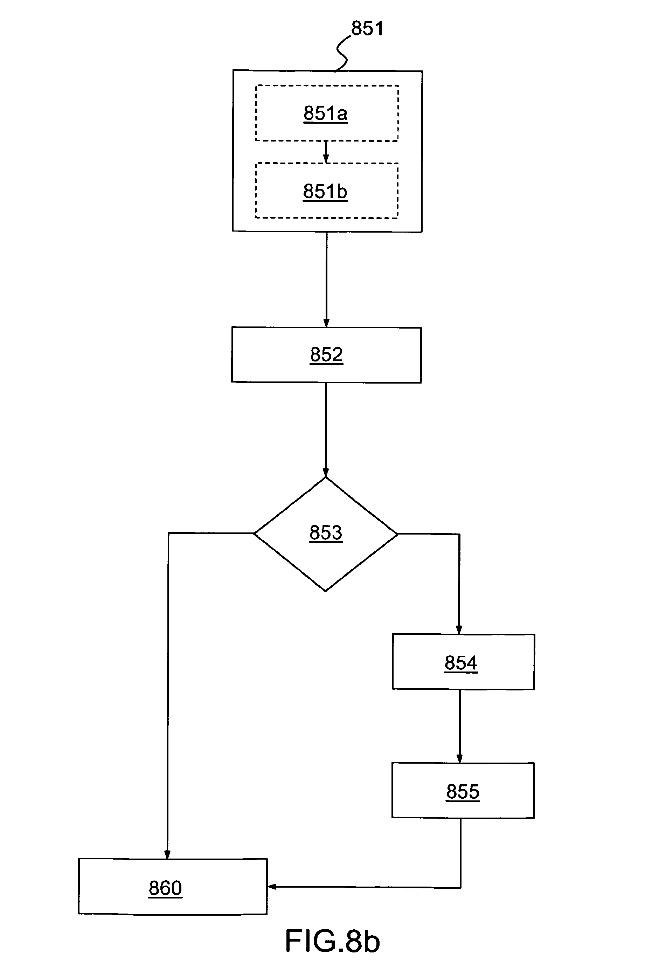

- les figures 8a et 8b, la disposition/configuration (8a) et les étapes (8b) d'un premier exemple de procédé selon l'invention ;

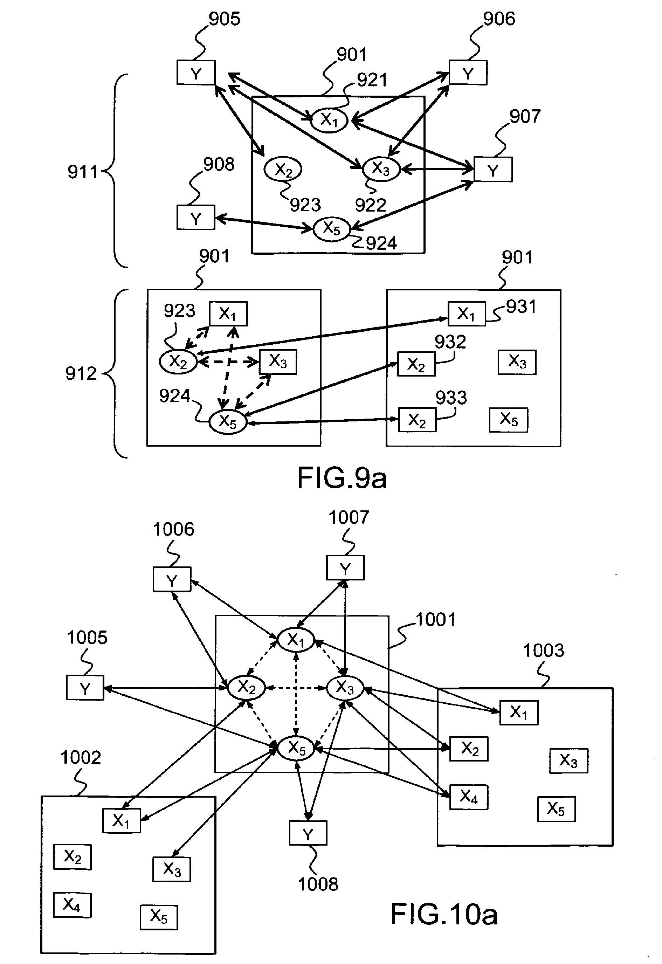

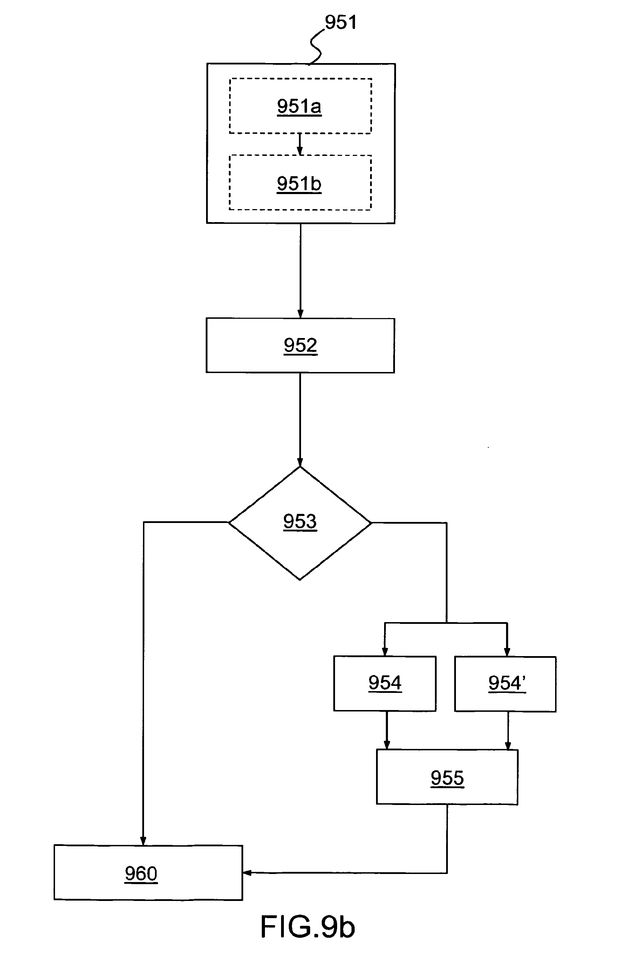

- les figures 9a et 9b, la disposition/configuration (9a) et les étapes (9b) d'un deuxième exemple de procédé selon l'invention ;

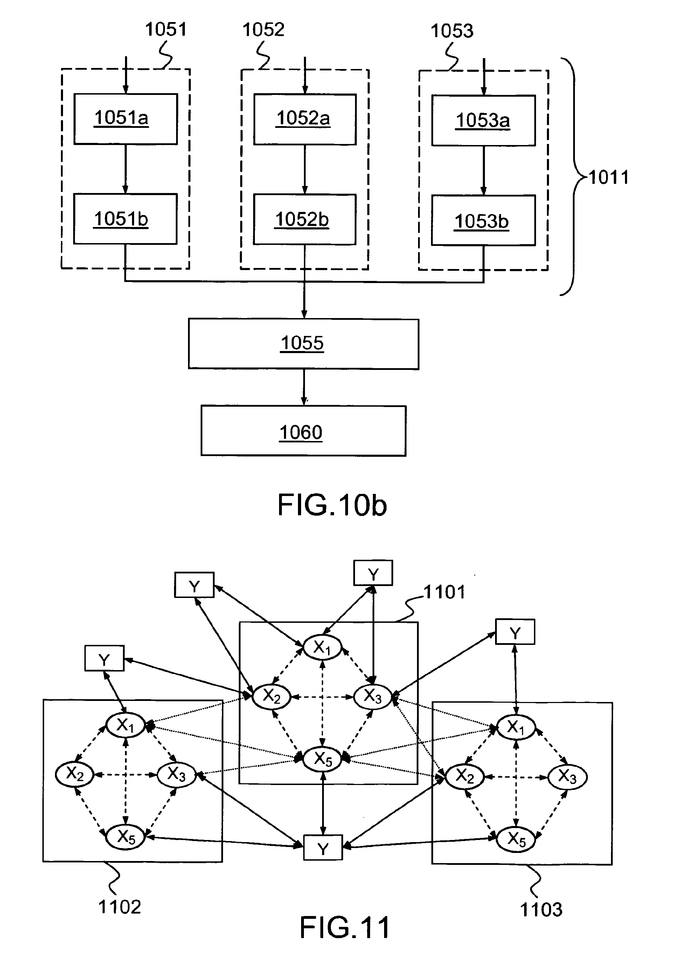

- les figures 10a, et 10b, la disposition/configuration (10a) et les étapes (10b) d'un troisième exemple de procédé selon l'invention ;
- la figure 11, la disposition/configuration d'un quatrième exemple de procédé selon l'invention ;

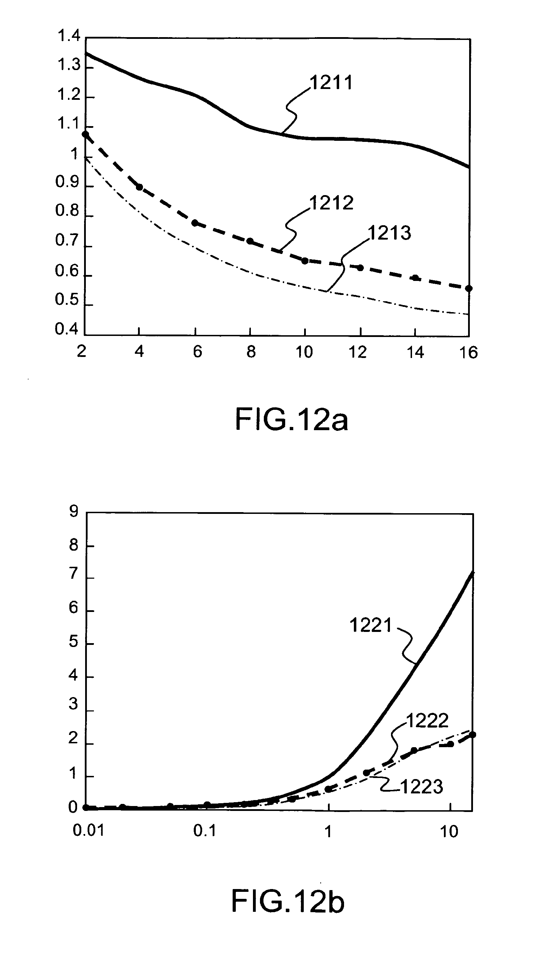

- les figures 12a et 12b, des courbes illustrant l'amélioration de la précision de localisation des noeuds d'un BAN obtenue par un dispositif selon l'invention utilisant des liens coopératifs intra-BAN ;

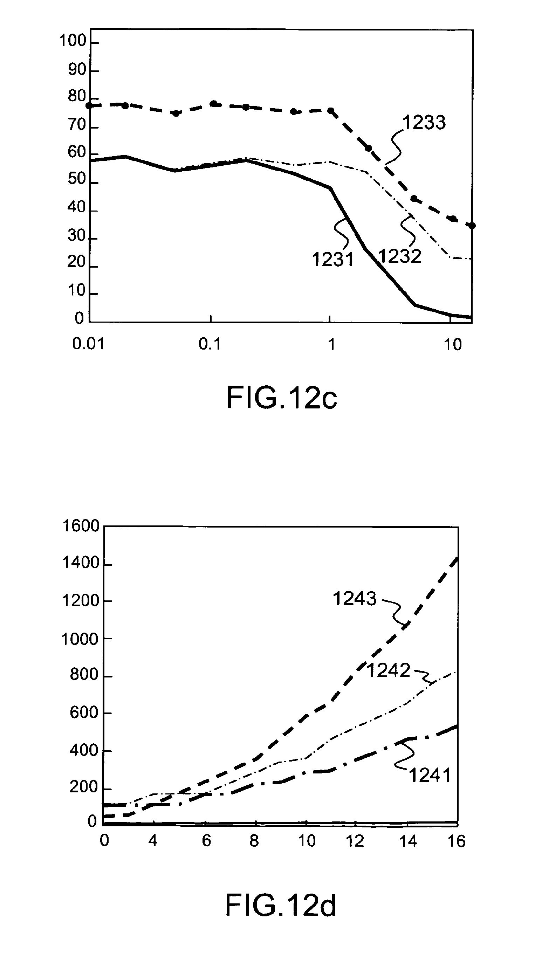

- la figure 12c, des courbes illustrant l'amélioration du taux de réussite dans la localisation des noeuds d'un BAN grâce à un dispositif selon l'invention utilisant des liens coopératifs intra-BAN ;
- la figure 12d, des courbes illustrant la réduction du temps nécessaire pour déterminer la position des noeuds d'un BAN grâce à un dispositif selon l'invention utilisant une sélection des liens coopératifs au sein d'un BAN ;

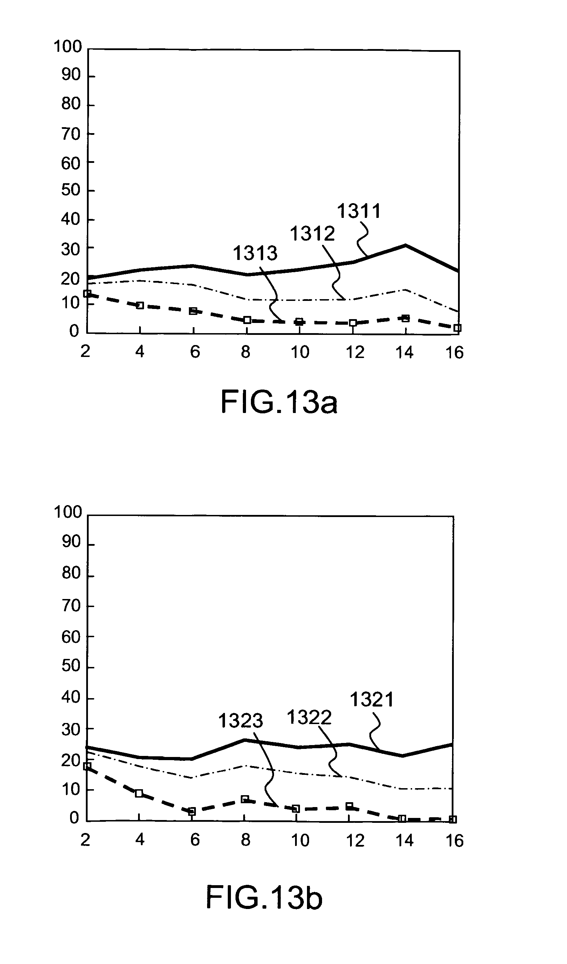

- les figures 13a et 13b, des courbes illustrant l'amélioration du taux de localisation des noeuds d'un BAN obtenu par un dispositif selon l'invention utilisant des liens coopératifs dans un ou plusieurs BAN proches ;

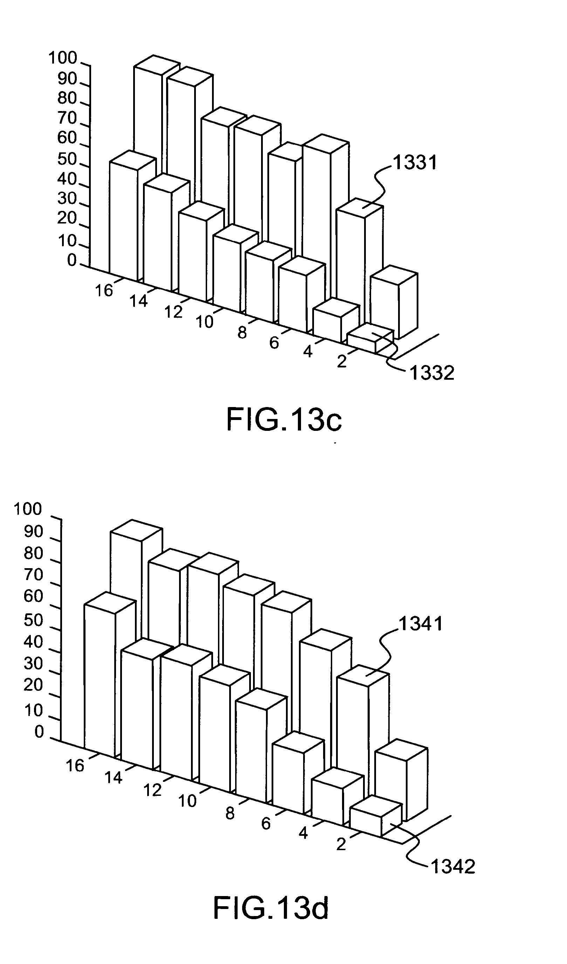

- les figures 13c et 13d, un graphique illustrant l'amélioration du taux de réussite dans la localisation des noeuds d'un BAN grâce à un dispositif selon l'invention utilisant des liens coopératifs dans un ou plusieurs BAN proches

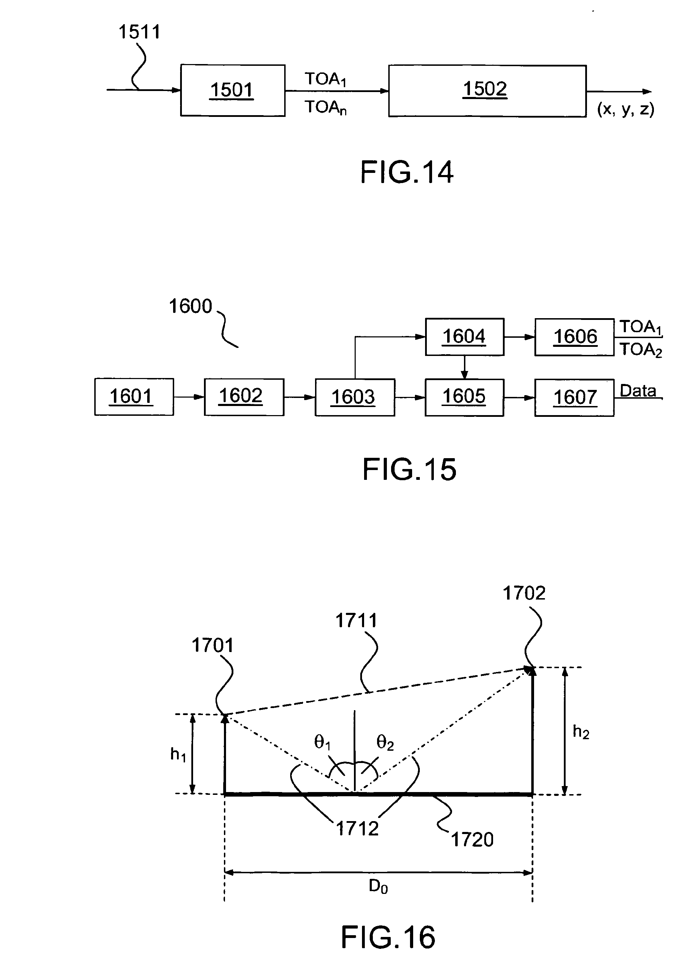

- la figure 14, un synoptique illustrant deux phases d'une mise en oeuvre d'un procédé selon l'invention exploitant au moins une mesure de temps de trajet indirect ;
- la figure 15, un mode de réalisation d'un récepteur ultra large bande mise en oeuvre par un procédé selon l'invention exploitant au moins une mesure de temps de trajet indirect,
- la figure 16, un exemple de trajet indirect causé par une réflexion au sol,

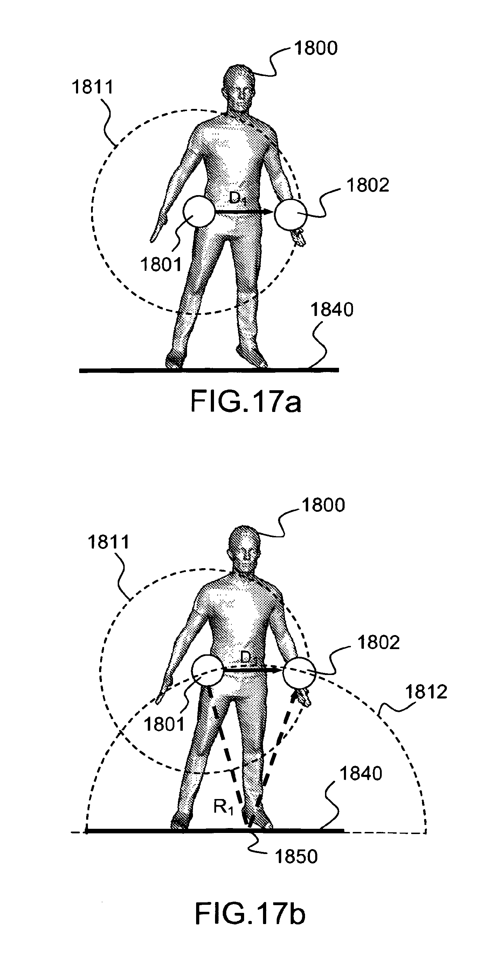

- les figures 17a et 17b, illustrant une première mise en oeuvre d'un procédé selon l'invention exploitant au moins une mesure de temps de trajet indirect,

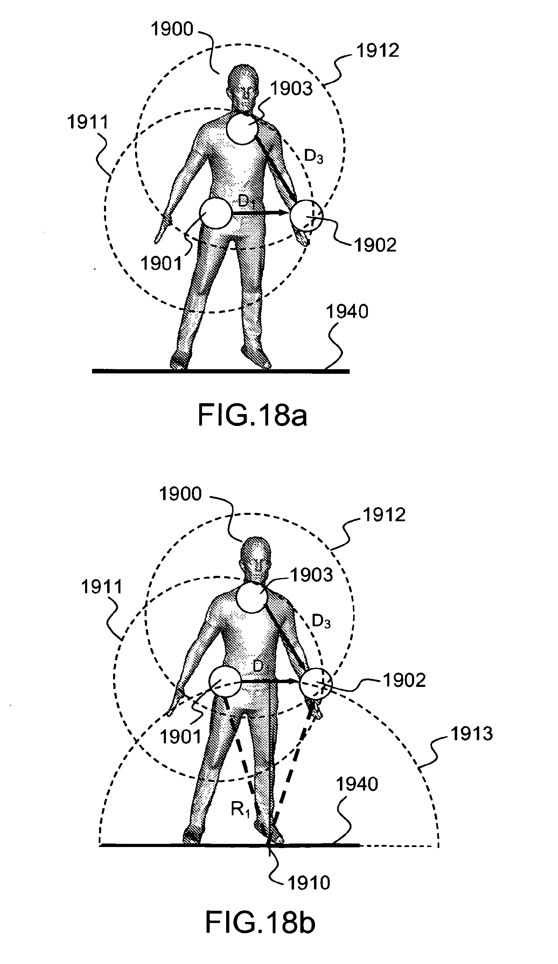

- les figures 18a et 18b, illustrant une deuxième mise en oeuvre d'un procédé selon l'invention exploitant au moins une mesure de temps de trajet indirect,

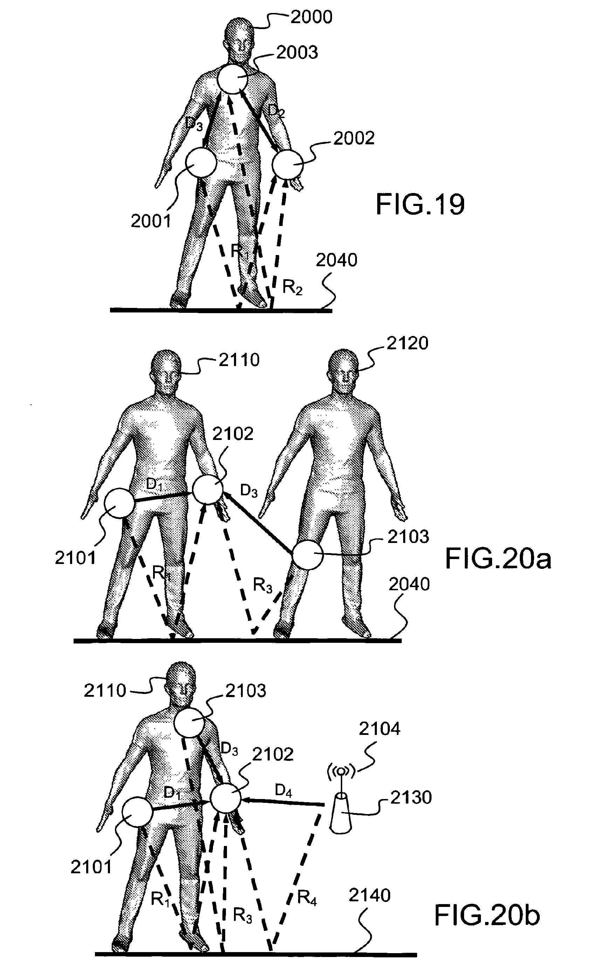

- la figure 19, illustrant une troisième mise en oeuvre d'un procédé selon l'invention exploitant au moins une mesure de temps de trajet indirect,
- les figures 20a et 20b, illustrant une quatrième mise en oeuvre d'un procédé selon l'invention exploitant au moins une mesure de temps de trajet indirect.

Par la suite, l'expression « localisation coopérative de BAN » désigne un type de localisation mettant en oeuvre des mesures de distance entre des objets mobiles situés sur une même personne et d'autres objets situés sur cette même personne, ou sur un groupe de personnes ou au niveau de l'infrastructure.

L'expression « position absolue » désigne la position d'un noeud calculée dans un référentiel donné, par exemple, une position de type GPS ou une position calculée par rapport à une infrastructure (comportant des ancres dont les positions sont connues a priori).

L'expression « position relative » désigne la position d'un noeud définie par rapport à d'autres entités, potentiellement mobiles (BAN, objets, etc), ou éléments de l'environnement (étage, pièce, par exemple), sans référence à un référentiel absolu.

Par « BAN proche géographiquement » ou par « BAN distant » d'un premier BAN, on entend un BAN qui est à portée de communication du premier BAN.

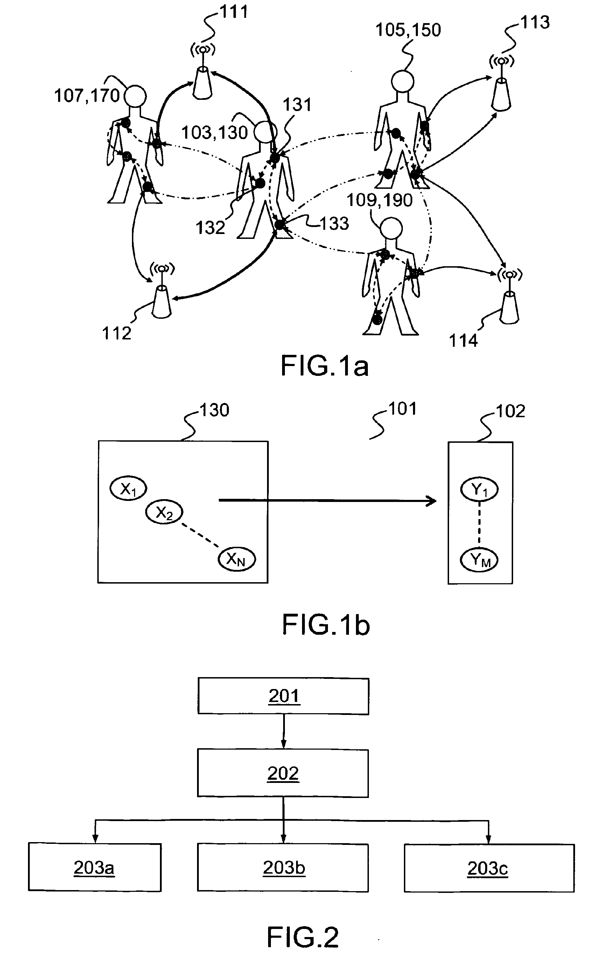

Un exemple de dispositif selon l'invention est maintenant décrit dans un contexte particulier et non limitatif et en relation avec la figure 1a. Un corps humain mobile 103 comprend plusieurs noeuds de communication 131, 132, 133 formant un réseau corporel 130, lequel réseau corporel est également désigné sous le nom de BAN 130, pour « Body Area Networks ». Chacun de ces noeuds 131, 132, 133 est un objet sans fil, qui peut être un émetteur, un récepteur ou bien les deux conjointement. Cet objet sans fil peut être fixé à l'intérieur du corps mobile, par exemple sous forme d'implants, ou à sa surface par exemple en contact direct avec les membres d'une personne ou intégrés aux vêtements, de sorte que les noeuds d'un même BAN peuvent être mobiles les uns par rapport aux autres et qu'il existe des relations d'ordre bio-mécaniques (par exemple, un noeud est disposé sur une main qui est nécessairement reliée à un corps humain par l'intermédiaire d'un bras limitant l'étendue de ses mouvements) ou mécaniques régissant la mobilité de ces noeuds, ces relations étant éventuellement mobilisables dans le cadre de l'invention. Le dispositif selon l'invention permet de déterminer précisément la position d'un ou de plusieurs noeuds du BAN 130 avec une couverture accrue, notamment grâce à la mise en oeuvre conjointe de procédés de localisation coopératifs :

- entre noeuds du même BAN 130 ; ce type de procédé coopératif sera qualifié par la suite de procédé coopératif « intra-BAN » ; et
- entre noeuds appartenant à des BAN situés à portée de communication, dans l'exemple entre au moins un noeud compris dans le BAN 130 et au moins un noeud compris dans les BAN 150, 170, 190 proches géographiquement ; ce type de procédé coopératif sera qualifié par la suite de procédé coopératif « inter-BAN ».

Les positions de noeuds du BAN 130 sont ainsi déterminées :

- relativement aux noeuds du même BAN 130 qui ont éventuellement des positions déjà connues ou qui ont pu être déterminées ; et
- relativement aux noeuds des BAN 150, 170, 190 environnants. Même si les noeuds des BAN environnants 150, 170, 190 ou les autres noeuds du même BAN 130 ayant servi aux mesures intra-BAN ou inter-BAN ne sont pas positionnés de manière absolue, la réalisation et la combinaison de plusieurs mesures de distances permet, par exemple, de donner des indications sur la position (ou la distance) relative d'un noeud par rapport à d'autres noeuds environnants.

La détermination de positions relatives peut suffire pour certaines applications comme la capture de mouvements ou l'optimisation des transmissions avec relais d'information dans le(s) réseau(x), par exemple. Toutefois, pour obtenir des positions absolues, c'est-à-dire des positions pouvant être placées dans un référentiel géographique connu - par exemple, le référentiel géodésique WGS84 -, le dispositif selon l'invention peut également mettre en oeuvre des coopérations entre des noeuds 131, 132, 133 du BAN 130 et des ancres 111, 112, 113, 114, qui sont des stations de base environnantes dont les positions géographiques sont connues.

Le procédé selon l'invention s'applique aussi bien à une localisation partielle des noeuds d'un BAN qu'à une localisation complète. Par « localisation partielle », on désigne des situations dans lesquelles le procédé selon l'invention permet de déterminer la position absolue d'un premier noeud d'un BAN et les positions (ou distances) relatives des autres noeuds du BAN par rapport à ce premier noeud, sans pouvoir néanmoins connaître la position absolue de ces autres noeuds.

L'exemple de la figure 1a montre un BAN 103 comprenant trois noeuds 131, 132, 133. Le premier noeud 131 est situé sur le haut du corps 103, par exemple sur une épaule, et est à portée de communication - par exemple, quelques dizaines de mètres dans le cas d'un réseau radio ultra large bande - d'une première ancre 111 et d'un deuxième corps mobile 105. Le deuxième noeud 132 est situé sur le milieu du corps 103, par exemple sur la hanche, et est à portée de communication d'un troisième corps mobile 107. Le troisième noeud 133 est situé sur le bas du corps 103, par exemple sur une jambe, et est à portée de communication d'une deuxième ancre 112, du deuxième corps mobile 105 et d'un quatrième corps mobile 109. Les deuxième, troisième et quatrième corps mobiles 105, 107, 109 comprennent chacun un BAN 150, 170, 190 qui peut également mettre en oeuvre le procédé selon l'invention pour déterminer les positions de ses noeuds. Autrement dit, plusieurs dispositifs selon l'invention peuvent coopérer entre eux, des noeuds dans chaque BAN 130, 150, 170, 190 pouvant interagir avec d'autres noeuds du même BAN ou des noeuds de BAN proches.

Le procédé et le dispositif selon l'invention peuvent être configurés pour avoir un faible impact sur les performances de la couche d'accès au medium, ou couche MAC (« Medium Access Control »), grâce à l'utilisation de mesures sélectives.

La figure 1b schématise l'architecture d'un dispositif selon l'invention. Le dispositif 101 comprend un premier BAN 130 pourvu de N noeuds de communication $X_1$, $X_2$, ..., $X_N$, N étant supérieur ou égal à deux. Le dispositif 101 est situé à portée de communication d'au moins un équipement distant 102 pourvu de M noeuds de communication $Y_1$, $Y_2$, ..., $Y_M$, M étant supérieur ou égal à 1, cet équipement distant 102 pouvant, par exemple, être une ancre fixe, un autre dispositif selon l'invention comportant son propre BAN, ou un corps mobile pourvu d'un seul noeud de communication.

Le dispositif de la figure 1b fonctionne en deux phases s'appuyant sur une exploitation concomitante d'au moins deux types de mesures de distance parmi lesquelles des mesures entre des ancres et un BAN, des mesures intra-BAN, et des mesures inter-BAN. Dans une première phase, plusieurs noeuds $X_1$, $X_2$, ..., $X_N$ du premier BAN 130 effectue au moins une mesure de distance entre ce noeud et un deuxième noeud, appartenant soit au premier BAN 130, soit à l'équipement 102, de telle sorte que parmi toutes les mesures de distances effectuées, au moins une mesure est effectuée avec un deuxième noeud $Y_1$, $Y_2$, ..., $Y_M$ appartenant à l'équipement distant 102. Une fois ces mesures de distances effectuées, celles-ci sont exploitées dans une deuxième phase par le dispositif pour localiser des noeuds de communication $X_1$, $X_2$, ..., $X_N$ du premier BAN 130, et éventuellement pour en déduire la position du premier BAN 130, relativement à l'équipement 102.

La figure 2 illustre, par un synoptique, les étapes d'un procédé selon l'invention. Le procédé selon l'invention comprend deux phases principales 201, 202. La première phase 201 est une phase de mesure de distances et la deuxième phase 202 est une phase d'exploitation de ces mesures, en vue de fournir des informations nécessaires à une ou plusieurs applications 203a, 203b, 203c, le positionnement du corps mobile et éventuellement son suivi dans le temps, la capture de mouvements ou de postures, et l'auto-organisation d'un réseau corporel, autrement dit l'aide au déploiement automatique d'un réseau corporel pour éviter de devoir le configurer manuellement.

La première phase 201 implique des mesures de distances entre noeuds d'un même BAN, entre noeuds de BAN différents et éventuellement entre au moins un noeud d'un BAN et une ou plusieurs ancres. Une mesure de distance entre deux noeuds peut être effectuée par un échange de signaux entre ces noeuds ou au moins une transmission d'un signal entre deux noeuds, différentes métriques pouvant être utilisées pour estimer la distance séparant les noeuds.

L'estimation d'une distance entre deux équipements sans fil se base généralement sur le calcul d'un temps de vol (également désigné par l'acronyme anglo-saxon TOF, pour « Time Of Flight ») et sur la connaissance de la célérité des ondes dans l'air (par exemple les ondes électromagnétiques en cas de transmissions radio ou ondes acoustiques). Le temps de vol décrit le temps que met une onde pour traverser une distance séparant un émetteur d'un récepteur. Avantageusement, l'emploi d'une technologie radio de type Ultra Large Bande permet une mesure très précise du TOF, du fait des propriétés de résolution des signaux et capacités de synchronisation fine ou de représentation temporelle du canal.

Les métriques radio temporelles suivantes peuvent notamment être utilisées pour faire du positionnement :

- la métrique du temps d'arrivée (ou TOA pour « Time Of Arrival », en langue anglaise), dans laquelle la valeur du TOF est déterminée grâce à des mesures de TOA suite à un échange de plusieurs signaux (ou paquets) entre des dispositifs (noeuds) à priori asynchrones, ces techniques étant connues sous les appellations anglo-saxonnes de « two-way ranging », « three-way ranging » ou encore de « double sided two-way ranging » ;
- la métrique du temps d'arrivée (ou TOA pour « Time Of Arrival », en langue anglaise), dans laquelle la valeur du TOF est déterminée grâce à une mesure du TOA suite à la transmission d'un signal entre une paire de dispositifs synchronisés, cette technique étant connue sous l'appellation anglo-saxonne de « one-way ranging », la synchronisation entre les deux dispositifs radio étant effectuée au moyen d'une méthode connue de l'homme de l'art, par exemple avec une horloge et/ou un ou des déclencheurs déportés - «Trigger » en langue anglaise -, relié(s) physiquement aux deux dispositifs radio au moyen de câbles ou de liens radio supplémentaires et communiquant un « top » de synchronisation aux deux dispositifs radio par ces mêmes moyens, et/ou par la présence d'un récepteur GPS embarqué dans chacun des deux dispositifs radio, etc); et
- la métrique de la différence de temps d'arrivée (ou TDOA pour « Time Difference Of Arrival »), la TDOA étant obtenue grâce à une mesure des différences de temps d'arrivée (TOA) suivant la technique du « one-way ranging » avec des récepteurs considérés comme étant isochrones (c'est-à-dire partageant la même base de temps), indépendamment de l'instant effectif d'émission.

Aussi, une mesure de distance entre deux équipements peut également être obtenue en utilisant une métrique de type puissance du signal reçu (ou RSSI pour « Received Signal Strength Indicator »). Cependant, l'estimation d'une distance à partir de la puissance du signal reçu n'est pas triviale, particulièrement lorsqu'elle est appliquée aux réseaux corporels sans fil, étant donné la grande variabilité du canal de transmission radio, due principalement aux effets de masquage et aux phénomènes d'évanouissements rapides. De plus, l'utilisation de la métrique RSSI nécessiterait la connaissance :

- d'une part, d'un modèle établissant une relation entre l'atténuation (parfois qualifiée par l'expression anglo-saxonne « path loss ») subie par la puissance transmise en fonction de la distance parcourue par l'onde radio entre l'émetteur et le récepteur (par exemple, un modèle d'atténuation moyenne pour une propagation dite « en espace libre » (ou « free space »)), et

■ d'autre part, de paramètres suffisamment précis pour ce même modèle (par exemple, un facteur d'affaiblissement (ou « path loss exponent »), l'écart type des fluctuations liées aux phénomènes de masquage (ou « Shadowing ») et/ou d'évanouissements rapides (ou « Small-Scale Fading »), l'atténuation subie ou puissance reçue à la distance de référence, voire la puissance d'émission, les gains des antennes d'émission et de réception. La majorité de ces paramètres dépend principalement de l'environnement de propagation, notamment si la mesure de distance est effectuée en intérieur ou à l'extérieur, avec des objets statiques ou mobiles, avec obstructions des liens radio ou non. Par conséquent, les deux premières métriques TOA et TDOA sont privilégiées dans le cadre de la présente invention.

La deuxième phase 202 du procédé selon l'invention est une phase d'exploitation des mesures de distances obtenues lors de la première phase 201, selon les différents procédé coopératifs susmentionnés (intra-BAN, inter-BAN, ancres-BAN), de manière à déterminer les positions relatives ou absolues d'un ou de plusieurs noeuds d'un BAN ou de plusieurs BANs.

L'algorithme utilisé pour déterminer les positions à partir des mesures de distance est, par exemple, un algorithme connu, tel qu'un procédé d'optimisation non-linéaire, la méthode matricielle des moindres carrés linéarisés, les méthodes de multi-latération et de tri-latération, les filtres de Kalman et les filtres particulaires (y compris coopératifs). Cet algorithme prend en entrée les différentes mesures de distance disponibles et/ou sélectionnée, et retourne en sortie les différentes informations nécessaires telles que les positions relatives (par exemple les distances relatives entre tous les noeuds mobiles d'un même BAN), absolues, pour une application donnée, par exemple pour la navigation, la localisation d'un BAN, la capture de mouvements.

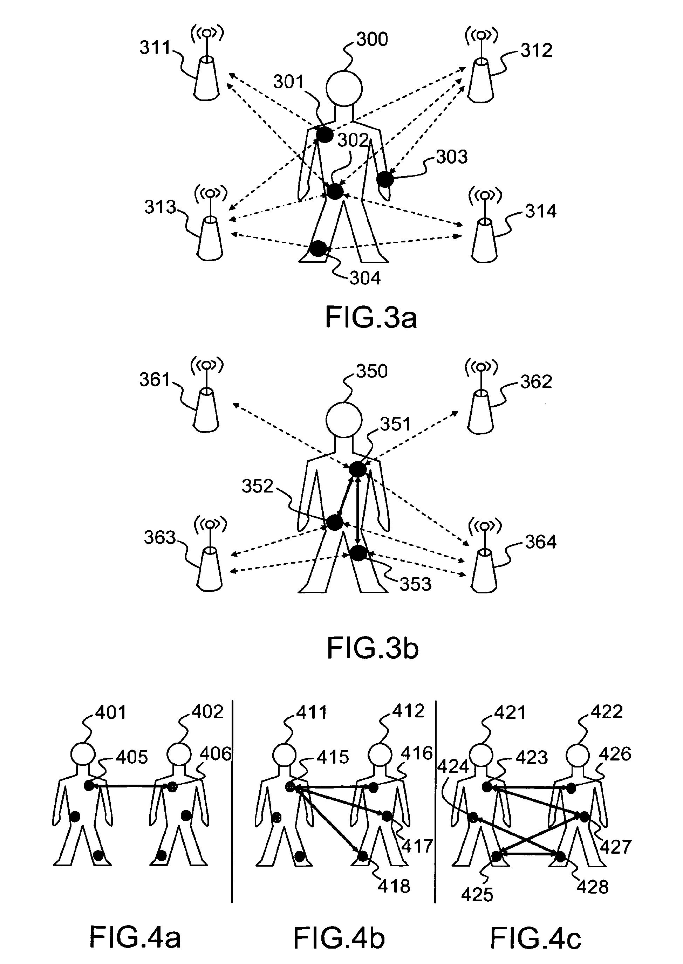

La figure 3a présente un exemple de BAN selon l'art antérieur pour illustrer des problèmes rencontrés dans les BAN connus. Des mesures de distances sont effectuées entre des noeuds sans fil 301, 302, 303, 304 d'un BAN situé sur le corps 300 d'une personne et quatre ancres 311, 312, 313, 314 localisées dans l'espace environnant. Les mesures de distances étant obtenues via des signaux échangés entre les noeuds sans fil, les phénomènes d'évanouissement rapide et d'effets de masque induits par le corps humain en mouvement peuvent perturber ces échanges de signaux et donc les mesures. En outre, selon l'orientation du corps 300 de la personne par rapport aux ancres 311, 312, 313, 314, les mesures de distances obtenues peuvent être incomplètes, à cause, par exemple :

■ du caractère dynamique de la topologie du réseau, qui induit des disparitions temporaires de certains liens radio ;

■ la présence d'un taux d'erreur paquets, ou « Paquet Error Rate » (PER) très élevé (le PER représentant la probabilité de perte de paquets de données transmis suite à des erreurs de démodulation et/ou de synchronisation), traduisant des pertes de paquets utiles à la localisation (des mesures de distances et/ou transmissions d'informations telles que les quantités mesurées ou estimées, sous forme de « timers » d'horloge, de distances ou de coordonnées) ;

■ d'une forte atténuation des signaux traversant le corps humain ;

■ d'une faible puissance de transmission rendant un ou plusieurs noeuds hors de portée des ancres 311, 312, 313, 314.

Généralement, quatre mesures de distance par noeud sont nécessaires pour effectuer un positionnement non-coopératif en 3D d'un noeud (en utilisant par exemple une technique de tri-latération), et trois mesures sont nécessaires pour effectuer un positionnement en 2D. Aussi, comme illustré en figure 3a, seul le positionnement de deux noeuds 301, 302 est possible grâce à l'utilisation d'un algorithme de tri-latération. La position en 2D du premier noeud 301 peut être déterminée grâce à des mesures de distances effectuées entre ce premier noeud 301 et trois ancres 311, 312, 313, tandis que la position en 3D du deuxième noeud 302 peut être obtenue grâce à des mesures de distances effectuées entre ce deuxième noeud 302 et quatre ancres 311, 312, 313, 314. Il n'est pas possible de déterminer la position absolue des deux autres noeuds 303, 304 dans le référentiel des ancres, étant donné le trop faible nombre de mesures obtenues, inférieur à trois. A titre d'illustration, l'impossibilité de déterminer la position de deux noeuds 303, 304 sur les quatre présents 301, 302, 303, 304 sur le corps 300 affecte l'estimation de la position du BAN, lorsque celle-ci est, par exemple, effectuée en calculant le barycentre des coordonnées des noeuds dont les positions ont pu être déterminées uniquement à partir de liens vis-à-vis des ancres.

Une première technique pour pallier les inconvénients précités du BAN de la figure 3a est un procédé coopératif de type intra-BAN couplé aux liens déjà présents vis-à-vis des ancres. Ce procédé coopératif met en oeuvre des mesures de distances Intra-BAN, c'est-à-dire des mesures de distance entre des noeuds appartenant à un même BAN.

De plus, afin de limiter l'impact sur les performances de la couche MAC (notamment en termes de débit, d'énergie, de latence), les liens radio entre les noeuds ne sont pas pris en compte de manière exhaustive. En effet, seul un sous-ensemble de liens radio est pris en compte lors de la première phase 201 (cf. figure 2) de mesure de distances. Un critère satisfaisant pour sélectionner des liens radio faisant partie de ce sous-ensemble est de choisir uniquement les liens entre les noeuds dont la position n'a pas pu être déterminée et les noeuds dont la position a pu être déterminée. Ainsi, les noeuds dont les positions ont été déjà déterminées - grâce aux mesures de distance avec les ancres - sont, par la suite, considérés comme étant des « ancres virtuelles », c'est-à-dire des objets pouvant, à leur tour, être utilisés comme des repères, au même titre que les ancres déjà présentes sous forme d'équipements distants du BAN. Ces ancres virtuelles pourront ainsi être utilisées par certains noeuds appartenant au même BAN pour pouvoir déterminer leur position. Une autre solution conforme au procédé selon l'invention consiste à utiliser rigoureusement les mêmes mesures que dans le cas coopératif précédent, mais à assurer le positionnement de tous les noeuds mobiles simultanément, en alimentant une seule étape algorithmique de positionnement ou de poursuite avec les mesures disponibles et/ou sélectionnées, sans avoir recours au calcul intermédiaire des positions d'ancres virtuelles.

La figure 3b illustre l'emploi d'ancres virtuelles au sein d'un BAN du dispositif selon l'invention, autrement dit un procédé coopératif de type intra-BAN. Un BAN 350 comprend trois noeuds 351, 352, 353 et est environné par quatre ancres 361, 362, 363, 364. Les distances séparant le premier noeud 351 de la première ancre 361, de la deuxième ancre 362 et de la quatrième ancre 364 ont pu être déterminées, ce qui permet de localiser ce premier noeud 351. Par contre, les deuxième et troisième noeuds 352, 353 ne peuvent pas être localisés avec les seuls liens vis-à-vis des ancres car seules les distances les séparant respectivement des troisième et quatrième ancres 363, 364 ont pu être déterminées.

Aussi, afin de déterminer la position des deuxième et troisième noeuds 352, 353, des mesures de distance, représentées en traits continus fléchés sur la figure 3b, vers le premier noeud 351 sont effectuées. En effet, une fois que la position du premier noeud 351 a été déterminée, ce premier noeud 351 est considéré comme une ancre supplémentaire par les autres noeuds 352, 353. En combinant les mesures de distances déjà obtenues avec les ancres 363, 364, ainsi que les mesures de distance supplémentaires vers l'ancre « virtuelle » constituée par le premier noeud 351, un nombre suffisant de mesures est disponible pour pouvoir estimer une position des deuxième et troisième noeuds 352, 353. Quand bien même le nombre de mesures disponibles serait insuffisant pour pouvoir estimer une position des deuxième et troisième noeuds 352, 353, les mesures de distances supplémentaires obtenues permettraient de restreindre la zone géographique de l'espace dans laquelle ces noeuds 352, 353 sont susceptibles de se trouver.

Avantageusement, le recours à une ou plusieurs ancres « virtuelles » n'est requis que pour les noeuds dont les positions n'ont pas pu être déterminées grâce aux mesures de distances avec les ancres 361, 362, 363, 364 constituées par des équipements proches du BAN 350. Le procédé implique donc alors des mesures de distance sélectives entre les noeuds d'un même BAN. Ce procédé de coopération intra-BAN exploite la diversité spatiale des noeuds sans fil pour maximiser la couverture et la précision de la localisation d'un BAN, tout en évitant d'avoir recours à des mesures de distances exhaustives entre chaque paire de noeuds, donc avec un faible impact sur les performances du protocole d'accès au médium (MAC).

Une deuxième technique pour pallier les inconvénients précités du BAN de la figure 3a est un procédé coopératif de type inter-BAN, mettant en oeuvre des mesures de distance entre des noeuds appartenant à des BAN différents. Dans l'état de la technique, les solutions proposées se contentent généralement d'effectuer des mesures de distances entre une paire de noeuds bien spécifique. Dans ces cas classiques, le BAN est soit considéré comme étant formé d'un seul noeud sans fil, ou alors seul l'un des noeuds formant le BAN (parfois appelé, le « cluster head ») est autorisé (ou apte) à effectuer des mesures de distance.

La figure 4a présente une coopération simple de type « 1-vers-1 », qui est similaire à des solutions déjà employées dans l'état de la technique. Deux BAN 401, 402 évoluent à proximité l'un de l'autre. L'un des noeuds, dans chaque BAN 401, 402, est choisi comme étant un noeud leader 405, 406 (ou « cluster head »), et les mesures de distance ne s'effectuent qu'entre les noeuds leader 405, 406 à portée de communication. Ce procédé de coopération est limité puisqu'il ne permet pas de prendre en compte la diversité spatiale et la redondance d'information, rendues possibles par la présence de plusieurs noeuds sur les corps.

La première phase 201 du procédé selon l'invention est apte à la mise en oeuvre d'un schéma coopératif entre des BAN avec des mesures de distances entre plusieurs noeuds de ces BAN, et non pas avec une simple relation entre un premier noeud d'un premier BAN et un deuxième noeud d'un deuxième BAN. Selon le procédé selon l'invention, chaque noeud d'un premier BAN peut réaliser des mesures de distance vers :

- d'autres noeuds situés sur des BAN proches géographiquement, autrement dit, à portée de communication du premier BAN ;
- des noeuds appartenant à l'infrastructure environnante, c'est-à-dire à des ancres ou des noeuds d'un réseau fixe de capteurs.

Les figures 4b, 4c illustrent l'utilisation de liens coopératifs entre plusieurs BAN situés sur des corps mobiles distincts. La figure 4b présente une coopération de type « 1-vers-n ». Dans chaque BAN 411, 412, l'un des noeuds 415 pourra effectuer des mesures de distance vers tous les autres noeuds 416, 417, 418 compris dans des BAN proches géographiquement. La figure 4c présente une coopération de type « n-vers-n ». Tous les noeuds 423, 424, 425 d'un même BAN 421 sont aptes à effectuer des mesures de distances vers les noeuds 426, 427, 428 compris dans des BAN 422 proches géographiquement.

Ainsi, un ou plusieurs noeuds d'un BAN proche peuvent être utilisés pour effectuer des mesures de distance complémentaires. Grâce à la coopération inter-BAN, des personnes qui seraient hors de la portée des ancres ou stations de base, peuvent exploiter ces mesures de distances vers d'autres BAN à proximité géographique pour pouvoir se localiser. Ces BAN, ou les noeuds formant ces BAN, peuvent par exemple jouer le rôle d'ancres virtuelles, permettant ainsi d'accroître la couverture de la localisation. Il est à noter qu'il n'est pas nécessaire qu'un noeud devienne une ancre virtuelle (c'est-à-dire un noeud dont la position a été déterminée) pour pouvoir être utilisé pour effectuer des mesures de distance complémentaires.

Les figures 4-1, 4-2, 4-3, 4-4, 4-5 présentent des schémas illustrant plusieurs configurations possibles du dispositif selon l'invention. Des corps mobiles comprenant chacun des noeuds pouvant former un BAN sont représentés par des ovoïdes, des ancres sont représentées par des carrés, les croix représentant des noeuds, et les lignes droites représentent des liens de communication visant à mesurer une distance.

Dans la figure 4-1, un premier corps mobile 441 comprend deux noeuds 441a, 441b, le premier noeud 441a effectuant une mesure de distance avec une ancre 443, le deuxième noeud 441b effectuant une mesure de distance avec un noeud 442a d'un deuxième corps mobile 442 évoluant à proximité du premier corps mobile 441.

Dans la figure 4-2, un corps mobile 451 comprend deux noeuds 451a, 451b, le premier noeud 451a effectuant une mesure de distance avec une ancre 453, le deuxième noeud 451b effectuant une mesure de distance avec le premier noeud 451a du corps mobile 451.

Dans la figure 4-3, un premier corps mobile 461 comprend deux noeuds 461a, 461b, le premier noeud 461a effectuant une mesure de distance avec un noeud 462a d'un deuxième corps mobile 462 distant du premier corps mobile 461, le deuxième noeud 461b du premier corps mobile 461 effectuant une mesure de distance avec le premier noeud 461a du même corps mobile 461.

Dans la figure 4-4, un premier corps mobile 471 comprend deux noeuds 471a, 471b, le premier noeud 471a effectuant une mesure de distance avec un premier noeud 472a d'un deuxième corps mobile 472 distant du premier corps mobile 471, le deuxième noeud 471b du premier corps mobile 471 effectuant une mesure de distance avec le deuxième noeud 472b du deuxième corps mobile 472.

Dans la figure 4-5, un premier corps mobile 481 comprend deux noeuds 481a, 481b, le premier noeud 481a effectuant une mesure de distance avec un noeud 482a d'un deuxième corps mobile 482 distant du premier corps mobile 481, le deuxième noeud 481b du premier corps mobile 481 effectuant une mesure de distance avec un noeud 484a d'un troisième corps mobile 484 évoluant à distance des deux premiers corps mobiles 481, 482.

Dans la figure 4-6, un premier corps mobile 491 comprend deux noeuds 491a, 491b, le premier noeud 491a effectuant une mesure de distance avec un premier noeud 492a d'un deuxième corps mobile 492 distant du premier corps mobile 491 et une autre mesure de distance avec un deuxième noeud 492b du deuxième corps mobile 492.

Dans la figure 4-7, un premier corps mobile 491 comprend deux noeuds 491a, 491b, le premier noeud 491a et le deuxième noeud 491b effectuant chacun une mesure de distance avec un premier noeud 492a d'un deuxième corps mobile 492 distant du premier corps mobile 491 et une autre mesure de distance avec un deuxième noeud 492b du deuxième corps mobile 492.

Dans la figure 4-8, un premier corps mobile 491 comprend deux noeuds 491a, 491b, le premier noeud 491a et le deuxième noeud 491b effectuant chacun une mesure de distance avec un premier noeud 492a d'un deuxième corps mobile 492 distant du premier corps mobile 491 et une autre mesure de distance avec un deuxième noeud 492b du deuxième corps mobile 492, le premier noeud 491a et le deuxième noeud 491b effectuant chacun une mesure de distance avec un premier noeud 493a d'un troisième corps mobile 493 distant du premier corps mobile 491 et une autre mesure de distance avec un deuxième noeud 493b du troisième corps mobile 493.

Dans chacun des cas précités, la combinaison des mesures de distances opérées avec des noeuds appartenant à des éléments différents permet d'améliorer la couverture et la précision de localisation des noeuds compris par le premier corps mobile 441, 451, 461, 471, 481, 491.

Plusieurs modes de réalisation du dispositif selon l'invention sont maintenant présentés à titre non limitatif. Selon le mode choisi, les noeuds peuvent être soit des émetteurs, des récepteurs, ou bien les deux à la fois et la métrique de distance peut être différente, par exemple TOA, TDOA, ou RSSI. De plus, le calcul des positions effectué lors de la deuxième phase 202 (cf. figure 2) du procédé selon l'invention, à partir des mesures de distances obtenues lors de la première phase 201, peut être soit centralisé, c'est-à-dire effectué par une seule unité de calcul (par exemple dans un noeud d'un BAN), ou décentralisé, autrement dit effectué par plusieurs unités de calcul réparties (par exemple, des unités de calcul réparties dans plusieurs noeuds d'un BAN).

La figure 5 présente un premier mode de réalisation d'un dispositif selon l'invention. Le dispositif selon l'invention comprend un BAN mobile 501 formé de noeuds qui sont des émetteurs, représentés par des lettres « E » sur la figure. A portée de communication du BAN mobile 501, se trouvent des ancres 511, 512, 513, 514 et un autre équipement mobile 502, chacun comprenant des noeuds de communication sous la forme de récepteurs, représentés « R » sur la figure, ou d'émetteurs/récepteurs, représentés « E/R » sur la figure», l'expression « émetteurs/récepteurs » désignant un noeud pouvant émettre et recevoir des signaux. Ces noeuds aptes à la réception permettent d'assurer une liaison radiofréquence avec le BAN mobile 501 et, in fine, permettre aux noeuds émetteurs de ce BAN mobile 501 d'être localisés. Les traits fléchés représentent les signaux transmis par les émetteurs.

Plusieurs métriques de localisation peuvent être utilisées pour le mode de réalisation de la figure 5. Une première métrique envisageable est la méthode TDOA qui nécessite une synchronisation des noeuds « récepteurs » et/ou « émetteurs/récepteurs ». Une deuxième métrique est celle du TOA, qui peut être mise en oeuvre si les émetteurs, d'une part, et les récepteurs et/ou émetteurs/récepteurs, d'autre part, sont synchronisés par un moyen extérieur (par exemple par GPS ou liaison filaire). Une troisième métrique applicable est liée à la puissance radio reçue, par exemple la métrique RSSI qui ne nécessite aucune synchronisation des dispositifs présents au niveau de l'environnement à des fins de localisation (sauf une synchronisation plus grossière pour communiquer entre un émetteur et un récepteur ou un émetteur/récepteur). Dans cet exemple, le calcul des positions des noeuds du BAN mobile 501 s'effectue, de préférence, de manière centralisée et au niveau de l'infrastructure, c'est-à-dire par exemple au niveau des ancres 511, 512, 513, 514.

La figure 6 présente un deuxième mode de réalisation d'un dispositif selon l'invention. Le dispositif selon l'invention comprend un BAN mobile 601 formé de noeuds qui sont des récepteurs, représentés par des lettres « R » sur la figure. A portée de communication du BAN mobile 601, se trouvent des ancres 611, 612, 613, 614 et un autre équipement mobile 602, chacun comprenant des noeuds de communication sous la forme d'émetteurs, représentés « E » sur la figure, ou d'émetteurs/récepteurs, représentés « E/R » sur la figure. Ces noeuds aptes à l'émission permettent d'assurer une liaison radiofréquence avec le BAN mobile 601 et, in fine, permettre aux noeuds récepteurs de ce BAN mobile 601 d'être localisés. Les traits fléchés représentent les signaux transmis par les émetteurs.

Deux métriques principales de localisation peuvent être utilisées pour le mode de réalisation de la figure 6. Une première métrique envisageable est de type temporel, par exemple la métrique TOA ou la métrique TDOA qui nécessite une synchronisation des noeuds « émetteurs » et/ou « émetteurs/récepteurs ». Une deuxième métrique est liée à la puissance radio reçue, par exemple la métrique RSSI, et ne nécessite aucune synchronisation des dispositifs présents au niveau de l'environnement à des fins de localisation (sauf une synchronisation plus grossière pour communiquer entre un émetteur et un récepteur ou un émetteur/récepteur). Dans cet exemple, le calcul des positions des noeuds du BAN 601 peut s'effectuer par un module de calcul (non représenté sur la figure) implanté au niveau du BAN mobile 601, - de manière centralisée au niveau d'un noeud ou par calcul distribué sur plusieurs noeuds du BAN 601

-. Le calcul des positions des noeuds du BAN 601 peut également être effectué au niveau de l'infrastructure si les mesures de distance effectuées au niveau des noeuds récepteurs du BAN mobile 601 sont communiquées à l'infrastructure via d'autres moyens de communication sans fil, par exemple.

La figure 7 présente un troisième mode de réalisation d'un dispositif selon l'invention. Le dispositif selon l'invention comprend un BAN mobile 701 formé de noeuds qui sont des émetteurs/récepteurs, représentés par des lettres « E/R » sur la figure. A portée de communication du BAN mobile 701, se trouvent des ancres 711, 712, 713, 714 et un autre équipement mobile 702, chacun comprenant des noeuds de communication sous la forme d'émetteurs/récepteurs, représentés « E/R » sur la figure. Les métriques TOA, TDOA et RSSI peuvent être utilisées pour ce mode de réalisation et le calcul des positions des noeuds du BAN 701 peut s'effectuer aussi bien au niveau du BAN mobile 701, - de manière centralisée au niveau d'un noeud ou par calcul distribué sur plusieurs noeuds du BAN 701 - qu'au niveau de l'infrastructure.

Par ailleurs, les exemples présentés en figures 5, 6, et 7 peuvent être combinés de sorte qu'un BAN comprenne, par exemple, des noeuds émetteurs et des noeuds récepteurs. La configuration du BAN est choisie notamment en fonction de l'application visée et des contraintes qui s'y rapportent, par exemple la consommation et la synchronisation des noeuds.

Encore d'autres aspects de la mise en oeuvre du procédé selon l'invention peuvent faire l'objet de variations, selon l'application visée. Plusieurs autres exemples de mise en oeuvre sont présentés à titre non limitatif dans les figures suivantes, de manière à montrer des adaptations possibles en termes de schémas coopératifs utilisés ainsi que l'ordre dans lesquels ils sont employés.

Les figures 8a et 8b présentent la configuration de réseaux et les étapes d'un premier exemple de procédé selon l'invention qui exploite une coopération de type intra-BAN, en plus d'un positionnement par rapport à une infrastructure, pour déterminer la position absolue de noeuds d'un BAN 801 dans un contexte où la contrainte de consommation d'énergie est importante. Puisque les mesures de distance sont obtenues grâce à des transmissions de signaux entre les noeuds, il convient, pour réduire la consommation énergétique, de minimiser le nombre de ces transmissions. Aussi, l'ordre dans lequel les mesures de distances sont réalisées est important.

Dans l'exemple des figures 8a et 8b, des mesures de distances sont, dans une première étape 811, effectuées entre des ancres 805, 806, 807, 808 et des noeuds du BAN, afin de positionner ces noeuds par rapport à l'infrastructure. A l'issue de cette première étape, il est possible que seuls certains noeuds 821, 822 du BAN 801 soient positionnés, les positions des autres noeuds 823, 824 n'ayant pas pu être déterminées, notamment à cause des pertes subies au niveau du canal radio, notamment par collisions et interférences, ou en raison d'un rapport signal sur bruit trop défavorable.

Dans une deuxième étape 812, exécutée seulement si certains noeuds du BAN n'ont pas pu être positionnés à l'issue de la première étape caractérisée par la configuration 811, des mesures de distances sont réalisées de manière sélective et non pas exhaustive. Plus précisément, des mesures de distances intra-BAN, représentées en traits discontinus sur la figure 8a, sont réalisées entre de premiers noeuds 823, 824 dont la position n'a pas pu être déterminée lors de la première étape 811 et de seconds noeuds 821, 822 dont la position a déjà été déterminée via des mesures de distances avec les ancres. Certains liens coopératifs sont délibérément sacrifiés en vue de limiter les échanges de signaux et réduire ainsi la consommation d'énergie.

Dans une troisième étape optionnelle, la position globale du BAN est estimée, par exemple par un calcul de barycentre des coordonnées des noeuds dont la position a été estimée.

La figure 8b illustre plus précisément le déroulement du procédé de localisation, selon ce premier exemple.

Dans un premier temps 851, des mesures de distance sont effectuées entre les noeuds du BAN 801 (cf. figure 8a) et les ancres environnantes 805, 806, 807, 808. Une mesure de distance comprend, par exemple, une première étape 851a de transmission ou d'échange de signaux radiofréquences entre les noeuds du BAN 801 et les ancres et une deuxième étape 851 b d'évaluation de la distance à partir des signaux transmis ou échangés en utilisant une métrique de radiolocalisation parmi celles mentionnées plus haut. Une fois ces mesures de distance effectuées, une étape d'estimation 852 de la position des noeuds du BAN 801 est exécutée en combinant ces mesures de distances. A l'issue de cette étape d'estimation 852, un test 853 est exécuté pour savoir si tous les noeuds du BAN ont pu être positionnés. Si tous les noeuds du BAN 801 ont été positionnés, alors une étape 860 d'estimation de la position globale du BAN 801 peut être exécutée en combinant les positions des noeuds estimées précédemment. Si, a contrario, certains noeuds du BAN 801 n'ont pas pu être positionnés, alors des mesures intra-BAN sont effectuées 854 au sein du BAN 801. Ensuite, une étape complémentaire d'estimation 855 de la position des noeuds qui n'avaient pas été positionnés lors de la précédente étape 852 d'estimation de la position des noeuds est exécutée. A l'issue de cette étape complémentaire d'estimation 855, l'étape 860 d'estimation de la position globale du BAN 801 peut être exécutée, celle-ci bénéficiant des positions des noeuds déterminées pendant l'étape complémentaire d'estimation 855 pour, notamment, obtenir une estimation globale plus précise de la position du BAN 801.

Les figures 9a et 9b présentent la configuration de réseau(x) et les étapes d'un deuxième exemple de procédé selon l'invention qui exploite conjointement une coopération de type intra-BAN et de type inter-BAN, en plus d'un positionnement par rapport à une infrastructure, pour déterminer la position absolue des noeuds d'un BAN 901 dans un contexte où la contrainte de consommation d'énergie est importante. Similairement au premier exemple des figures 8a, 8b, l'ordre dans lequel les mesures de distances sont réalisées est important pour limiter la consommation énergétique.

Une première étape 911 est identique à la première étape 811 de la figure 8a. Des mesures de distances sont réalisées entre les noeuds 921, 922, 923, 924 du BAN 901 et les ancres environnantes 905, 906, 907, 908, de manière à déterminer la position de plusieurs noeuds vis-à-vis de l'infrastructure constituée par ces ancres 905, 906, 907, 908.

Dans une deuxième étape 912, deux types de mesures de distance sont effectués concomitamment. Le premier type de mesures est représenté en traits discontinus sur la figure 9a ; il s'agit des mesures entre noeuds du BAN 901, de manière similaire à la coopération intra-BAN illustrée en figure 8a. Le deuxième type de mesures est représenté en traits continus entre le premier BAN 901 et un deuxième BAN 902 ; il s'agit de mesures de distances de type inter-BAN, entre les noeuds 923, 924 du premier BAN 901 dont la position n'a pas pu être déterminée lors de la première étape 901 et des noeuds 931, 932, 933 d'un autre BAN 902 à portée de communication du premier BAN 901. Ces coopérations intra-BAN et inter-BAN sont combinées pour maximiser le nombre de noeuds positionnés du BAN 901 et raffiner l'estimation de la position des noeuds du BAN 901.

La figure 9b illustre plus précisément le déroulement du procédé de localisation, selon ce deuxième exemple.

Dans un premier temps 951, des mesures de distance sont effectuées entre les noeuds du premier BAN 901 (cf. figure 9a) et les ancres environnantes 905, 906, 907, 908. Une mesure de distance comprend, par exemple, une première étape 951a de transmission de signaux radiofréquences entre les noeuds du premier BAN 901 et les ancres et une deuxième étape 951 b d'évaluation de la distance en utilisant une métrique parmi celles mentionnées plus haut. Une fois ces mesures de distance effectuées, une étape d'estimation 952 de la position des noeuds du BAN 901 est exécutée en combinant ces mesures de distances. A l'issue de cette étape d'estimation 952, un test 953 est exécuté pour savoir si tous les noeuds du BAN ont pu être positionnés. Si tous les noeuds du premier BAN 901 ont été positionnés, alors une étape 960 d'estimation de la position globale du premier BAN 901 peut être exécutée en combinant les positions des noeuds estimées précédemment. Si, a contrario, certains noeuds du premier BAN 901 n'ont pas pu être positionnés, alors des mesures intra-BAN sont effectuées 954 au sein du BAN 901. Parallèlement, des mesures inter-BAN 954' sont effectuées entre le premier BAN 901 et le deuxième BAN 902. Ensuite, une étape complémentaire d'estimation 955 de la position des noeuds qui n'avaient pas été positionnés lors de la précédente étape 952 d'estimation de la position des noeuds est exécutée. A l'issue de cette étape complémentaire d'estimation 955, l'étape 960 d'estimation de la position globale du BAN 801 peut être exécutée, celle-ci bénéficiant des positions des noeuds déterminées pendant l'étape complémentaire d'estimation 955 pour, notamment, obtenir une estimation globale plus précise de la position du premier BAN 901.

Les figures 10a et 10b présentent configuration de réseau(x) et les étapes d'un troisième exemple de procédé selon l'invention, qui exploite conjointement une coopération de type intra-BAN et de type inter-BAN, en plus d'un positionnement par rapport à une infrastructure, pour déterminer la position absolue des noeuds d'un BAN 1001 dans un contexte où la contrainte de précision est importante. Toutes les mesures de distance pouvant être réalisées sont alors prises en compte.

Aussi, concomitamment, des mesures de distance sont effectuées, de manière exhaustive et dans la limite de liens de transmission réalisables (i.e. en conditions de connectivité restreinte), entre chaque noeud du BAN 1001 et :

- toutes les ancres 1005, 1006, 1007, 1008 à portée de communication ;
- tous les autres noeuds du BAN 1001 (coopération intra-BAN) ; ces mesures de distances sont représentées en traits discontinus sur la figure 10a ;
- tous les noeuds compris dans des BAN 1002, 1003 à portée de communication (coopération inter-BAN).

Pour cette mise en oeuvre du procédé selon l'invention, l'ordre dans lequel les mesures sont réalisées n'est pas important, car toutes les mesures sont exploitées simultanément pour estimer la position des noeuds. Dans cet exemple, tous les liens coopératifs (intra-BAN, inter-BAN et ancres 1005, 1006, 1007, 1008) sont considérés conjointement en vue d'améliorer la précision de la localisation, au détriment de la consommation énergétique.

La figure 10b illustre plus précisément le déroulement du procédé de localisation, selon ce troisième exemple.

Dans un premier temps 1011, les étapes 1051, 1052, 1053 de mesures de distance sont effectuées en parallèle ou séquentiellement, mais de manière exhaustive. Une étape 1051 concerne les mesures entre le BAN 1001 et les ancres 1005, 1006, 1007, 1008, une autre étape effectuée 1052 concerne les mesures intra-BAN, et encore une autre étape effectuée concerne les mesures inter-BAN entre le BAN 1001 et les autres BAN 1002, 1003. A l'issue de ces étapes de mesures de distances 1051, 1052, 1053, une étape 1055 d'estimation de la position des noeuds du BAN 1001 est exécutée, puis une étape optionnelle 1060 d'estimation de la position globale du BAN 1001 est exécutée.

La figure 11 illustre une utilisation multiple du procédé selon le troisième exemple présenté en figures 10a, 10b. Le procédé exploite conjointement une coopération de type intra-BAN et de type inter-BAN, en plus d'un positionnement par rapport à une infrastructure, pour déterminer concomitamment la position absolue des noeuds de plusieurs BAN 1101, 1102, 1103 dans un contexte où la contrainte de précision est très importante.

Les étapes du troisième exemple décrit plus haut sont exécutées par chacun des BAN 1101, 1102, 1103, les mesures exhaustives étant exploitées simultanément par chaque BAN pour estimer la position de leurs noeuds.

Ainsi, selon qu'il est recherché une forte précision ou une faible consommation énergétique et une faible latence, selon qu'un positionnement absolu ou relatif est souhaité, le caractère exhaustif ou sélectif des mesures de distances à effectuer, les types de schémas coopératifs à combiner (intra-BAN et inter-BAN ; ancres-BAN et intra-BAN ; ancres-BAN et inter-BAN ; ancres-BAN et intra-BAN et inter-BAN), ainsi que l'ordre dans lequel ces schémas sont mis en oeuvre, sont choisis différemment.

En résumé, on peut identifier notamment les modes de mise en oeuvre suivants :

- si une faible consommation énergétique est recherchée, il est préférable de choisir un mode sélectif de mesures de distances, et :

  ◦ si un positionnement absolu est souhaité, choisir un schéma coopératif faisant intervenir en premier lieu des mesures de distances avec des ancres ;
  ◦ si un positionnement relatif est souhaité, choisir une combinaison de schémas intra-BAN et inter-BAN ;

- si une forte précision est souhaitée, choisir un mode exhaustif de mesures de distances, et :

  ◦ si un positionnement absolu est souhaité, faire intervenir tous les schémas coopératifs disponibles (ancres-BAN et intra-BAN et inter-BAN) sans préoccupation de l'ordre ; ◦ si un positionnement relatif est souhaité, choisir une combinaison de schémas intra-BAN et inter-BAN ;

Les figures 12a et 12b présentent des courbes illustrant l'amélioration de la précision de localisation obtenue par un dispositif selon l'invention utilisant des liens coopératifs au sein d'un BAN, autrement dit un procédé coopératif de type intra-BAN. Il est considéré, dans l'exemple, un réseau corporel sans fil (c'est-à-dire un BAN), évoluant en environnement intérieur selon un modèle de mobilité réaliste. Le BAN est constitué d'un nombre variable de capteurs sans fil, et où chaque capteur, en plus de réaliser des mesures de distance vers des ancres, implémente trois protocoles de localisation :

- le premier protocole, exploite la diversité spatiale des capteurs situés sur une personne, mais ne met pas en oeuvre une coopération Intra-BAN (pas de mesures de distance entre les capteurs) ;
- le deuxième protocole met en oeuvre un schéma de coopération Intra-BAN avec des mesures de distance sélectives (mesures de distance entre un sous-ensemble de capteurs) ;
- le troisième protocole met en oeuvre un schéma de coopération Intra-BAN avec des mesures de distance exhaustives entre toutes les paires possibles de capteurs.

Dans l'exemple, la position globale du BAN est estimée en calculant le barycentre des coordonnées estimées des noeuds constituant le réseau corporel.

Plus précisément, la figure 12a présente l'erreur moyenne de localisation d'un BAN en fonction du nombre de capteurs par BAN (de deux à seize), et la figure 12b présente l'erreur moyenne de positionnement d'un BAN en fonction de l'erreur d'estimation du temps de vol (de 1cm à 15m). Les courbes 1211, 1221 en trait plein illustrent le cas d'un BAN ne bénéficiant pas de procédé coopératif de type intra-BAN, les courbes 1212, 1222 en traits discontinus illustrent le cas d'un BAN bénéficiant d'un procédé coopératif de type intra-BAN exhaustif, et les courbes 1213, 1223 illustrent le cas d'un BAN bénéficiant d'un procédé coopératif de type intra-BAN sélectif. L'approche exhaustive conduit à considérer toutes les mesures de distances disponibles et l'algorithme choisi pour positionner les noeuds est appliqué à tous les noeuds ; autrement dit dans l'approche exhaustive, même les noeuds ayant un nombre insuffisant de mesures de distance (par exemple, inférieur ou égal à deux dans le plan) sont positionnés, ce qui peut conduire à des erreurs. A contrario, dans l'approche sélective, seuls les noeuds ayant un nombre suffisant de mesures de distance (supérieur ou égal à trois dans le plan, par exemple) sont positionnés ; les autres ne sont pas positionnés. L'approche sélective permet ainsi d'obtenir un positionnement plus précis en comparaison de l'approche exhaustive.

Comme l'illustre la figure 12a, plus le nombre de capteurs du BAN augmente, plus l'erreur de positionnement du réseau corporel diminue. De plus, les figures 12a et 12b montrent qu'une coopération de type intra-BAN, de type sélective ou exhaustive, permet d'améliorer considérablement la précision de la localisation globale du BAN. Cette amélioration est notamment due à une meilleure exploitation de la diversité spatiale, et de la redondance d'information, grâce à la multiplicité des mesures de distance. La redondance résulte du fait que de multiples mesures de distances associées à différents liens, mais impliquant un ou plusieurs mêmes noeuds, comportent une quantité d'information mutuelle relative aux positions de ces noeuds (c'est-à-dire une même position pouvant intervenir dans plusieurs distances). La diversité spatiale est obtenue naturellement en distribuant plusieurs objets (émetteurs et/ou récepteurs) par corps mobile, assurant ainsi des liens radio statistiquement indépendants et présentant des conditions de propagation différentes (c'est-à-dire pour des liens d'un noeud vers de multiples noeuds voisins, ou bien des liens de multiples noeuds vers un même noeud voisin). Ainsi, par exemple, si l'un des objets est masqué par rapport à une ancre, il peut exister un autre objet visible de cette même ancre, permettant ainsi d'obtenir une mesure de distance jusqu'à l'ancre. Aussi, plus le nombre d'objets par corps est élevé, plus le taux de succès des mesures de distances est élevé.

La figure 12c présente des courbes illustrant l'amélioration du taux de succès dans la localisation des noeuds d'un BAN grâce à un dispositif selon l'invention utilisant des liens coopératifs au sein d'un BAN. La localisation d'un noeud est considérée comme étant un succès si l'erreur de positionnement est inférieure à un certain seuil défini selon l'application visée (dans l'exemple de la figure 12c, le seuil est défini à 2m). Une première courbe 1231 illustre le cas d'un BAN sans procédé coopératif, une deuxième courbe 1232 illustre le cas d'un BAN avec un procédé coopératif de type sélectif et une troisième courbe 1233 illustre le cas d'un BAN avec un procédé coopératif exhaustif. La figure 12c montre qu'une coopération de type intra-BAN permet d'améliorer le taux de couverture, surtout pour une erreur d'estimation de temps de vol supérieure à 50 cm.

La figure 12d présente des courbes illustrant le délai nécessaire pour déterminer la position des noeuds d'un BAN en fonction de la méthode utilisée. L'exemple de la figure 12d correspond à des échanges de type « 3-way ranging » et d'une couche protocole ou « Medium Access Control » (MAC) de type 802.15.4 « beacon-enabled ». A noter que seuls les délais liés à l'acquisition des mesures de distances nécessaires au positionnement sont prises en compte et que le temps de traitement, qui est tributaire du choix de l'algorithme et de la plateforme de calcul, n'entre pas ici en considération. Une couche protocole de ce type se base sur la présence d'un noeud coordinateur, qui transmet périodiquement un « beacon » (autrement dit, un paquet spécifique de signalisation et de synchronisation) afin de délimiter le début de la super-trame pour les noeuds de base (une fois synchronisés sur ce beacon), et de coordonner les transmissions des noeuds à l'intérieur de cette super-trame. Les couches MAC de type beacon-enabled ont notamment fait l'objet de la publication suivante : M. Maman, F. Dehmas, R. D'Errico, et L. Ouvry, "Evaluating a TDMA MAC for Body Area Networks Using a Space-time Dependent Channel Model," The 20th Personal, Indoor and Mobile Radio Communications Symposium (PIMRC 2009), Tokyo, Japan, September 2009.

Puisque les mesures de distance sont obtenues grâce à une transmission de signaux (ou de paquets) entre des noeuds, les protocoles de localisation ont un impact non négligeable sur les performances obtenues au niveau du protocole d'accès au médium (couche 2 du modèle OSI), et notamment en termes de disponibilité des mesures de métriques de radiolocalisation (par exemple, l'allocation de ressources pour des mesures de distances point-à-point sur la base de l'estimation du TOA de paquets échangés dans les schémas protocoles de type « two-way ranging ») et/ou de taux de rafraichissement pour ces mêmes mesures.

Une première courbe 1241 illustre le cas d'un BAN sans procédé coopératif, une deuxième courbe 1242 illustre le cas d'un BAN avec un procédé coopératif de type sélectif et une troisième courbe 1243 illustre le cas d'un BAN avec un procédé coopératif exhaustif. La figure 12d montre que pour la coopération Intra-BAN de type exhaustif, le délai d'acquisition des données est très long, et pourrait même s'avérer rédhibitoire pour des applications temps-réel de type « navigation piéton ». Par contre, la mise en oeuvre d'une coopération Intra-BAN sélective selon l'invention est par essence parcimonieuse dans le sens où elle autorise une économie d'énergie, en mobilisant des ressources (c'est à dire un nombre de liens radio ou de mesures autorisés par l'allocation d'intervalles de temps dédiés) limitées, uniquement si celles-ci s'avèrent nécessaires. Cette approche permet, dans l'exemple fourni, de diminuer de moitié le délai obtenu.

Les figures 13a et 13b présentent des courbes illustrant l'amélioration du taux de localisation des noeuds d'un BAN obtenu par un dispositif selon l'invention utilisant des liens coopératifs dans un ou plusieurs BAN proches. Pour ces exemples, on considère un groupe de réseaux corporels sans fil évoluant à l'intérieur d'un environnement intérieur suivant un modèle de mobilité de groupe réaliste.

Dans le cas de la figure 13a, l'erreur d'estimation du temps de vol est considérée comme étant égale à 3cm, tandis que pour la figure 13b, l'erreur d'estimation du temps de vol est considérée comme étant égale à 3m. L'axe des ordonnées représente le pourcentage de BANs qui n'ont pas réussi à se positionner (sans prendre en compte de seuil maximal pour l'erreur de positionnement), l'axe des abscisses représentant le nombre de BANs par groupe, variant de deux à seize.

Une première courbe 1311, 1321 illustre le cas d'un BAN sans procédé coopératif, une deuxième courbe 1312, 1322 illustre le cas d'un BAN avec un procédé coopératif de type « 1 vers n » et une troisième courbe 1313, 1323 illustre le cas d'un BAN avec un procédé coopératif de type « n vers n ». Il apparaît sur les figures 13a, 13b que sans coopération inter-BANs, le taux d'échec du positionnement est en moyenne égal à 25%. En mettant en oeuvre des schémas de coopération inter-BANs, ce taux diminue en dessous de 20% pour une coopération de type « 1-vers-1 », et en dessous de 10% pour une coopération de type « n-vers-n ».

Les figures 13c et 13d présentent des graphiques illustrant l'amélioration du taux de réussite dans la localisation des noeuds d'un BAN grâce à un dispositif selon l'invention utilisant des liens coopératifs dans un ou plusieurs BAN proches. L'axe des ordonnées représente le taux de positionnement obtenu, l'axe des abscisses représentant le nombre de BANs par groupe. Dans le cas de la figure 13c, l'erreur d'estimation du temps de vol est considérée comme étant égale à 3cm, tandis que pour la figure 13d, l'erreur d'estimation du temps de vol est considérée comme étant égale à 3m.

Un premier histogramme 1331, 1341 illustre le cas d'un BAN avec un procédé coopératif de type « 1 vers n » et une troisième courbe 1332, 1342 illustre le cas d'un BAN avec un procédé coopératif de type « n vers n ». Les figures 13c et 13d mettent en évidence le gain obtenu grâce une coopération Inter-BANs, par rapport au cas sans coopération Inter-BANs, en termes de taux de succès du positionnement. Le gain que l'on peut obtenir grâce à ces schémas de coopération Inter-BANs, varie de 10% à 90% par rapport au cas sans coopération. Ce gain dépend notamment du nombre de BANs par groupe et du mode de coopération « 1-vers1 » ou « n-vers-n ».

Selon une mise en oeuvre du procédé selon l'invention, le procédé comprend également une étape de mesure de temps de vol d'un trajet indirect de signal ultra large bande transmis entre un premier noeud d'un BAN et un deuxième noeud, ledit trajet étant issu d'une unique réflexion sur une surface externe au corps mobile supportant le BAN, entre le premier noeud et le deuxième noeud, le deuxième noeud étant compris, au choix, par :

  ◦ le BAN portant le premier noeud ;
  ◦ un équipement fixe et distant dudit corps ;
  ◦ un deuxième BAN.

Un avantage d'effectuer une ou plusieurs mesures de temps de trajet indirect est de faire bénéficier au système de localisation, à moindre coût, de mesures supplémentaires liées aux réflexions, notamment pour :

  ▪ lever les ambiguïtés géométriques qui peuvent apparaitre lorsque les mesures de distances sont incomplètes ;
  ▪ améliorer la précision du positionnement grâce à la redondance et à la richesse des mesures obtenues ; ou
  ▪ permettre un positionnement relatif en fonction de contraintes géométriques et/ou biomécaniques du corps.

Quelques termes et expressions utilisés par la suite sont maintenant définies. Par « réflexion simple », on entend une réflexion unique, à l'opposé d'un signal réfléchi successivement plusieurs fois. Par « réflexion reproductible en temps », on entend une réflexion qui, toutes choses égales par ailleurs, peut être reproduite à l'identique dans le temps, à chaque fois que l'on réémet le signal qui se réfléchit. Par « réflexion reproductible en espace », on entend une réflexion qui peut être reproduite à l'identique dans l'espace (selon la mobilité d'élément), à chaque fois que l'on réémet un signal. Ceci est notamment le cas d'une réflexion sol ou plafond. Cette reproductibilité implique également la possibilité de borner ou de prédire l'instant (ou la période temporelle) de réception d'un trajet d'onde. Par « algorithme de poursuite », on entend un algorithme qui permet le suivi, par exemple, d'une position (ou d'un ou plusieurs trajets, ou d'une vitesse, ou d'une accélération), au cours du temps (par exemple la localisation dynamique). Un exemple d'un tel algorithme est le filtre de Kalman.

Les exemples donnés par la suite sont illustrés avec des corps humain, mais d'autres types de corps, organiques ou inorganiques (tels des robots ou des véhicules autoguidés) pourraient être employés.

La figure 14 présente un synoptique illustrant deux phases principales 1501, 1502 d'un procédé selon l'invention exploitant une mesure de temps de trajet indirect.

La première phase 1501 exploite un récepteur UWB apte à restituer une image du canal multi-trajets, autrement dit capable d'estimer la réponse impulsionnelle du canal de propagation des ondes, et exécute un algorithme d'estimation des temps d'arrivées d'au moins un trajet issu d'une réflexion simple et reproductible en temps et en espace, par exemple, une réflexion sur le sol, un plafond, voire sur des murs ou des meubles. La première phase 1501 fournit donc, à partir des signaux radioélectriques 1511 reçus par un noeud, une ou plusieurs estimations $TOA_1$, ..., $TOA_n$ de temps d'arrivée correspondant chacune à un trajet d'onde, au moins un trajet parmi ces trajets étant un trajet indirect (ou secondaire).

Ensuite, la deuxième phase 1502 exploite, par un algorithme de positionnement et/ou de poursuite, les estimations $TOA_1$, ..., $TOA_n$ de temps d'arrivée afin de suivre ou positionner en relatif ou en absolu, le noeud que l'on cherche à localiser.

La première phase 1501 est maintenant détaillée. On peut distinguer deux catégories de techniques pour la réception d'un signal UWB : la réception cohérente et la réception non-cohérente.

La technique de réception cohérente peut s'appuyer sur une corrélation glissante. Elle permet d'obtenir des performances quasi optimales. Une fenêtre d'observation très courte est positionnée en fonction de l'instant d'arrivée d'une impulsion, et un calcul du taux de corrélation entre le signal reçu et un motif (ou une estimation du signal transmis) est réalisé. Cette technique peut être, dans certains cas, assez complexe et nécessite des contraintes de synchronisation assez forte, peu adaptées à des systèmes contraints en énergie.

La technique de réception non-cohérente effectue une détection d'énergie du signal reçu, en comparant l'amplitude de l'enveloppe du signal avec un seuil donné. Au moins deux variantes de cette technique sont possibles, en fonction de l'intervalle d'intégration de la puissance du signal. Selon une première variante, l'intégration est effectuée sur la durée de l'étalement temporel des multi-trajets, aussi appelé RMS Delay Spread de la réponse impulsionnelle du canal (soit environ 20 à 80 ns en environnement intérieur). Selon une deuxième variante, l'intégration est effectuée à l'échelle de l'impulsion UWB émise (soit environ quelques ns). La première variante permet de récupérer le maximum d'énergie et est donc plus adaptée aux applications de communication, tandis que la deuxième méthode permet de mieux exploiter la grande résolution temporelle des signaux UWB et est donc plus adaptée à des applications de localisation ou d'estimation du canal.

Il est important que la reconstruction de l'image du canal de propagation multi-trajets au niveau du récepteur UWB soit suffisamment précise pour pouvoir effectuer l'analyse de la liaison radio entre le noeud émetteur et le noeud récepteur UWB. Aussi, quelle que soit la technique retenue, au terme de cette première étape de réception des signaux radioélectriques 1511, le noeud récepteur UWB doit disposer en bande de base d'une image du canal multi-trajets correspondant au lien radio considéré entre deux noeuds émetteurs/récepteurs UWB, et être capable d'extraire les temps d'arrivées correspondant, respectivement, au trajet direct et aux trajets liés à des réflexions reproductibles.

La figure 15 présente un mode de réalisation d'un récepteur ultra large bande mise en oeuvre par le procédé exploitant au moins une mesure de temps de trajet indirect. Le récepteur 1600 comprend un premier module d'amplification 1601 amplifiant le signal reçu et alimentant un module de conversion en bande de base 1602, lequel fournit le signal reçu transposé en fréquence à un convertisseur analogique-numérique 1603 échantillonnant le signal à au moins la fréquence de Nyquist. Le convertisseur analogique-numérique 1603 alimente un module d'estimation de la réponse impulsionnelle 1604, d'une part, et un récepteur RAKE 1605 d'autre part. Le récepteur RAKE (ou récepteur à doigts) est un récepteur optimal (contenant un filtre adapté au canal) qui permet, d'une part, de contrer les effets des trajets multiples en combinant en phase plusieurs échos reçus, et d'autre part d'augmenter le rapport signal-à-bruit (SNR), améliorant ainsi la détectabilité / synchronisation / démodulation du signal. Le signal issu du récepteur RAKE est ensuite décodé dans le bloc 1607 afin de récupérer les données utiles qui ont été transmises. Parallèlement, le convertisseur analogique-numérique 1603 alimente également un module pour l'estimation de la réponse impulsionnelle du canal 1604, qui est ensuite exploitée par un module d'extraction des trajets 1606.

L'étape d'extraction 1606 des temps d'arrivée, correspondant au trajet direct et à un ensemble de trajets indirects reproductibles (réflexion sol, plafond, etc.) peut être difficile, notamment dans le contexte des réseaux corporels sans fil qui se caractérisent par un taux très élevé de liens radio en situation d'obstruction, c'est à dire en situation NLOS.

Des algorithmes connus permettent d'estimer les temps d'arrivées liés aux trajets directs. On peut notamment citer l'algorithme de maximum de vraisemblance généralisé (GML) qui se base sur l'algorithme CLEAN publié dans J. Hogborn, "Aperture Synthesis with a Non-Regular Distribution of Interferometer Baselines", Astron. and Astrophys. Suppl. Ser, vol. 15, 1974.

Par ailleurs, l'extraction des trajets issus de réflexions simples et reproductibles peut être facilitée, par exemple en appliquant un fenêtrage ou une poursuite de trajet, à partir de la connaissance de la position temporelle du trajet direct (sur la base de la dernière localisation ou synchronisation disponible), et/ou d'une connaissance a priori de la géométrie de l'environnement, et/ou de contraintes géométriques et bio-mécaniques, par exemple, la disposition des noeuds émetteurs et/ou récepteurs sur un corps, ainsi que la hauteur du corps vis-à-vis du sol. Le fenêtrage consiste à ne sélectionner qu'une partie de la réponse impulsionnelle du canal. En effet, grâce à la connaissance de la hauteur du corps mobile (ou du noeud sans fil) et de la nature de la réflexion (sol, plafond, etc.), la distance maximale que peut parcourir un tel trajet réfléchi, est déterminée. Il est dès lors possible d'appliquer un fenêtrage temporel sur la réponse impulsionnelle du canal, afin d'exclure les trajets non pertinents. L'extraction des trajets secondaires issus de réflexions simples peut également être réalisée grâce à un algorithme de poursuite, qui à partir de la connaissance des positions temporelles précédentes de ces trajets (estimées précédemment), estime les positions actuelles de ces trajets.

Il est à noter que durant l'étape d'extraction des trajets, on peut également chercher à tirer profit de métriques radios, comme par exemple le « RMS delay spread », afin de faciliter la discrimination entre les situations LOS et NLOS, et/ou pour assister et améliorer la précision des algorithmes de positionnement. Cette métrique du « Delay Spread » permet d'apprécier l'étalement temporel significatif, ou dispersion des retards, liés aux multi-trajets. Cet étalement tend à augmenter en condition d'obstruction des liens radio, ou NLOS, et constitue un outil de décision de l'état du canal.

La deuxième phase 1502 (cf. figure 14) exploite les mesures des temps d'arrivées, $TOA_1 ... TOA_n$, issues de la première phase 1501 et correspondant au trajet direct et à un ensemble de réflexions simples et reproductibles en temps et en espace, pour positionner ou suivre les noeuds d'un ou plusieurs réseaux corporels mobiles.

A titre illustratif et non limitatif, les temps d'arrivées considérés par la suite sont ceux liés aux trajets directs et aux trajets issus des réflexions sur le sol, même si d'autres types de trajets peuvent être pris en compte comme par exemple des réflexions sur un plafond ou, en supposant que les noeuds disposent d'une pré-connaissance de l'environnement, des réflexions vis-à-vis d'autres obstacles tels des murs ou des objets environnants.

La figure 16 illustre un exemple de trajet indirect causé par une réflexion au sol. Un signal radioélectrique est transmis par un noeud émetteur 1701 vers un noeud récepteur 1702. Un premier trajet 1711 entre les deux noeuds 1701, 1702 est le trajet direct, autrement dit, un segment de droite reliant les deux noeuds. Un deuxième trajet 1712, représenté sur la figure 16 par une alternance de points et de lignes, est un trajet indirect issu d'une réflexion sur le sol 1720. Pour rappel, l'angle d'incidence θ1 du deuxième trajet 1712 sur le sol est égal à l'angle de réflexion θ2.

Grâce à l'utilisation d'un récepteur UWB, tel que décrit plus haut, le noeud récepteur 1702 est capable d'estimer au moins une partie de la réponse impulsionnelle du canal et d'extraire les temps d'arrivées, $TOA_1$ et $TOA_2$, correspondant respectivement au trajet direct 1711 et au trajet indirect 1712.

En considérant des coordonnées exprimées dans un repère 3D, et en supposant que les noeuds sont synchronisés, la relation entre les temps d'arrivées, et les distances et coordonnées des noeuds peut être exprimée comme suit :

$$D_1 = \sqrt{D_O{}^2 + (h_2 - h_1)^2} \approx TOA_1 \times c$$

$$R_1 = \sqrt{D_O{}^2 + (h_2 + h_1)^2} \approx TOA_2 \times c$$

où :

- $D_0$ représente la distance au sol entre l'émetteur 1701 et le récepteur 1702 ;
- $D_1$ représente la longueur du trajet direct 1711 ;
- $R_1$ représente la longueur du trajet indirect 1712 ;
- c représente la célérité des ondes électromagnétiques ;
- $TOA_1$ et $TOA_2$ sont les temps d'arrivées mesurés qui correspondent aux temps de vol des signaux qui se propagent le long du premier trajet 1711 et du deuxième trajet 1712.
- $h_1$ et $h_2$ sont les hauteurs respectives auxquelles sont situés l'émetteur 1701 et le récepteur 1702.

Cet exemple peut être étendu au cas des systèmes asynchrones, auquel cas les temps de vol sont estimés au moyen d'un protocole de type N-Way ranging (tel que publié, par exemple dans D. Macagnano and AI., "MAC Performances for Localization and Tracking in Wireless Sensor Networks", In Proceedings of the 4th Workshop on Positioning, Navigation and Communication (WPNC), Mars 2007), en plus de l'estimation des temps d'arrivées.

A ce stade, le noeud récepteur 1702 peut exploiter ces deux mesures de distance pour affiner le calcul de sa position absolue ou relative vis-à-vis du noeud émetteur 1701.

L'algorithme de positionnement et/ou de suivi prend en entrée les différentes mesures de distance et métriques associées, et fournit en sortie les informations nécessaires (positions relatives, positions absolues, par exemple) pour une application donnée (navigation, positionnement, capture de mouvement, par exemple). Plusieurs algorithmes peuvent être employés pour effectuer le positionnement ou le suivi du noeud récepteur 1702, notamment les algorithmes d'optimisation non linéaire, la méthode des moindres carrés linéarisée, les méthodes de tri-latération, les filtres de Kalman (dont les Filtres de Kalman Etendus, ou EKF) et particulaires.

Plusieurs mises en oeuvres du procédé selon l'invention exploitant une mesure de temps de trajet indirect sont maintenant illustrées de manière ni restrictive ni exhaustive. Par souci de simplification, on considèrera par la suite que les trajets indirects sont dus à des réflexions sur le sol.

Les figures 17a et 17b illustrent une première mise en oeuvre d'un procédé selon l'invention exploitant une mesure de temps de trajet indirect, dans laquelle le positionnement d'un deuxième noeud 1802 attaché à un corps est effectué vis-à-vis d'un premier noeud 1801 attaché au même corps.

Dans l'exemple, les noeuds 1801, 1802 sont attachés à un corps humain 1800 en mouvement. La position du premier noeud 1801 est supposée connue dans un référentiel local au corps ou vis-à-vis d'un référentiel arbitraire existant. Le premier noeud 1801 transmet un signal vers le deuxième noeud 1802. Le deuxième noeud 1802 exécute le procédé selon l'invention en estimant, d'une part, la longueur $D_1$ du trajet direct et, d'autre part, la longueur $R_1$ du trajet indirect résultant d'une réflexion sur le sol 1840.

Dans l'exemple, la mesure de longueur du trajet indirect $R_1$ correspondant à la réflexion sur le sol 1840 correspond environ au double de la hauteur du premier noeud 1801. Il peut être alors déduit que le deuxième noeud 1802 se situe à proximité du plan horizontal passant par le premier noeud 1801. De plus, comme la mesure de longueur $D_1$ du trajet direct est supérieure à la largeur de la hanche du corps, il peut être déduit que le deuxième noeud 1802 est situé au niveau du poignet à la droite du premier noeud 1801.

Ainsi, comme l'illustre la figure 17a, la seule mesure de longueur $D_1$ du trajet direct n'aurait pas permis de positionner le deuxième noeud 1802, puisque le deuxième noeud 1802 aurait pu se situer sur la surface d'une sphère 1811 de rayon $D_1$ centrée sur le premier noeud 1801, représentée en pointillés sur la figure 18a. Grâce à la prise en compte, pour le même lien radio, d'une mesure supplémentaire de temps de vol due à la réflexion sur le sol, le deuxième noeud 1802 dispose de davantage d'informations qu'il peut exploiter pour déduire sa position relative ou absolue, grâce à des relations et des contraintes géométriques et/ou biomécaniques. Comme illustré dans la figure 17b, le deuxième noeud 1802 se situe à l'intersection d'une première sphère 1811 de rayon $D_1$ centrée sur le premier noeud 1801 avec une deuxième sphère 1812 centrée sur le point de réflexion 1850 sur le sol 1840. Il est évidemment à noter que plus le nombre de mesures de temps de vol de trajets (direct et indirects) est élevé, plus un positionnement précis du deuxième noeud 1802 est favorisé.

Il est à noter que selon une autre mise en oeuvre du procédé selon l'invention, c'est le deuxième noeud 1802 qui transmet un signal vers le premier noeud 1801, le temps de vol associé au trajet pouvant alors être retransmis vers le deuxième noeud 1802 par une autre liaison de communication.

Les figures 18a et 18b illustrent une deuxième mise en oeuvre d'un procédé selon l'invention exploitant au moins une mesure de temps de trajet indirect. Dans l'exemple, trois noeuds 1901, 1902, 1903 sont attachés à un corps humain 1900. Le premier noeud 1901 et le troisième noeud 1903 ont des positions déjà connues. Le procédé est utilisé pour positionner le deuxième noeud 1902 par rapport aux premier et troisième noeuds 1901, 1903.

Le premier noeud 1901 transmet un signal vers le deuxième noeud 1902 et le troisième noeud 1903 transmet également un signal vers le deuxième noeud 1902. Le deuxième noeud 1902 exécute ensuite le procédé selon l'invention en estimant la longueur $D_1$ du trajet direct entre le premier noeud 1901 et le deuxième noeud 1902, la longueur $R_1$ du trajet indirect entre le premier noeud 1901 et le deuxième noeud 1902, résultant d'une réflexion sur le sol 1940, et la longueur $D_3$ du trajet direct entre le troisième noeud et le deuxième noeud 1902.

Comme illustré en figure 18a, les seules mesures de longueur de trajets directs $D_1$ et $D_3$ ne permettent pas d'estimer précisément la position du deuxième noeud 1902, car certaines ambiguïtés géométriques persistent. Dans l'exemple de la figure 18a, on peut positionner le deuxième noeud 1902 au niveau du cercle marquant l'intersection de deux sphères, la première sphère 1911 étant de rayon $D_1$ et centrée sur le premier noeud 1901, la deuxième sphère 1912 étant de rayon $D_3$ et centrée sur le troisième noeud 1903. Grâce à la mesure supplémentaire de la longueur $R_1$ du trajet indirect, le deuxième noeud 1902 peut être positionné plus précisément en levant certaines ambiguïtés géométriques, puisqu'une nouvelle contrainte de positionnement est ajoutée sous la forme d'une surface d'une troisième sphère 1913 centrée sur le point de réflexion 1950 sur le sol.

La figure 19 illustre une troisième mise en oeuvre d'un procédé selon l'invention exploitant au moins une mesure de temps de trajet indirect, dans laquelle on positionne, de manière relative, un ensemble de noeuds attachés à un même corps et dont les positions sont a priori inconnues.

Dans l'exemple, trois noeuds 2001, 2002, 2003 sont attachés à un corps humain 2000. Le procédé est utilisé pour positionner chaque noeud par rapport aux deux autres. Des signaux sont transmis entre chaque paire de noeuds, et des mesures de longueur de trajets sont effectuées, dans l'exemple, comme suit :

- estimer, entre le deuxième noeud 2002 et le troisième noeud 2003, la longueur $D_2$ du trajet direct et la longueur $R_2$ du trajet indirect réfléchi sur le sol 2040 ;
- estimer, entre le premier noeud 2001 et le troisième noeud 2003, la longueur $D_3$ du trajet direct (dans l'exemple, aucune mesure de trajet indirect n'est effectuée entre ces deux noeuds) ;
- estimer, entre le premier noeud 2001 et le deuxième noeud 2002, la longueur $R_1$ du trajet indirect réfléchi sur le sol 2040 (dans l'exemple, aucune mesure de trajet direct n'est effectuée entre ces deux noeuds) ;

L'exploitation de la diversité multi-trajets du canal UWB, notamment en prenant en compte des mesures de longueur de trajets $R_1$, $R_2$ liées aux réflexions sur le sol, permet de minimiser les ambiguïtés géométriques pouvant apparaitre si l'on ne s'appuie que sur des mesures liées aux trajets directs. On peut ainsi reconstituer, en relatif, le positionnement des noeuds, des uns par rapport aux autres.

Ce type de positionnement purement relatif peut être utile pour de nombreuses applications, comme par exemple, la reconstitution du mouvement de la personne, le contrôle de l'attachement des noeuds à la personne, la vérification de l'intégrité du réseau formé par ces noeuds.

Les figures 20a et 20b illustrent une quatrième mise en oeuvre d'un procédé selon l'invention exploitant au moins une mesure de temps de trajet indirect, dans laquelle le positionnement d'un noeud mobile 2102 effectué vis-à-vis d'autres noeuds 2101, 2103 situés à portée de communication.

Dans l'exemple de la figure 20a, un premier noeud 2101 et un deuxième noeud 2102 sont situés sur un premier corps humain 2110, et un troisième noeud 2103 est situé sur un deuxième corps humain 2120, à portée de communication du deuxième noeud 2102. Les positions du premier noeud 2101 et du troisième noeud 2103 sont connues. On cherche à positionner le deuxième noeud 2102. Pour cela, des mesures de longueur de trajet sont effectuées, comme suit :

- estimer, entre le premier noeud 2101 et le deuxième noeud 2102, la longueur $D_1$ du trajet direct et la longueur $R_1$ du trajet indirect réfléchi sur le sol 2140 (mesures intra-BAN);
- estimer, entre le troisième noeud 2103 et le deuxième noeud 2102, la longueur $D_3$ du trajet direct et la longueur $R_3$ du trajet indirect réfléchi sur le sol 2140 (mesures inter-BAN).

Toutes les mesures effectuées dans l'exemple de la figure 20a sont dues à des transmissions de signaux entre les noeuds du même réseau corporel (BAN lié au premier corps humain 2110) ; ces mesures $D_1$, $R_1$, $D_3$, $R_3$ sont appelées mesures intra-BAN et sont exploitées pour positionner le deuxième noeud 2102.

Dans l'exemple de la figure 20b, un premier noeud 2101, un deuxième noeud 2102 et un troisième noeud 2103 sont situés sur un premier corps 2110 qui évolue à portée de communication d'une station de base fixe 2130, laquelle est appelée aussi « ancre ». La station de base 2130 comporte un noeud 2104. On cherche à déterminer la position absolue du deuxième noeud 2102. Pour cela, des mesures de longueur de trajet sont effectuées, comme suit :

- estimer, entre le premier noeud 2101 et le deuxième noeud 2102, la longueur $D_1$ du trajet direct et la longueur $R_1$ du trajet indirect réfléchi sur le sol 2140 (mesures intra-BAN) ;
- estimer, entre le troisième noeud 2103 et le deuxième noeud 2102, la longueur $D_3$ du trajet direct et la longueur $R_3$ du trajet indirect réfléchi sur le sol 2140 (mesures intra-BAN) ;
- estimer, entre le noeud 2104 de l'ancre 2130 et le deuxième noeud 2102, la longueur $D_4$ du trajet direct et la longueur $R_4$ du trajet indirect réfléchi sur le sol 2140 (mesures ancre-BAN).

Là encore, le deuxième noeud 2102 peut, en utilisant un algorithme de positionnement ou de poursuite (par exemple une méthode de trilatération, la méthode des moindres carrés, un filtrage), exploiter les mesures de longueurs $R_1$, $R_2$, $R_3$, de trajets indirects pour améliorer la précision de son positionnement.

Le procédé et le dispositif selon l'invention peuvent être employés, par exemple, dans les applications militaires, les applications de sécurité ou de secours, pour lesquelles le coût ou la consommation ne sont pas des facteurs limitant. Plus largement, le procédé et le dispositif selon l'invention sont utilisables dans les dispositifs destinés au grand public, par exemple pour la capture de mouvement, la détection de posture, la navigation, les réseaux sociaux augmentés faisant appel aux liens point-à-point entre une paire d'objets, et les services géo-localisés. A titre d'illustration, le dispositif selon l'invention peut permettre la localisation de groupes de personnes mobiles évoluant à l'intérieur de bâtiments où les dispositifs de localisation par satellite sont inutilisables, comme par exemple les centres commerciaux, les aéroports, les musées, les sites industriels, ou les bureaux. Il peut permettre à des utilisateurs de se situer dans une zone et, par exemple, de déterminer des itinéraires d'intérêt ou de bénéficier de techniques de réalité augmentée.

**Revendications**

1. Procédé de localisation coopérative d'une pluralité de noeuds (441 a, 441b, 451 a, 461 a, 471 a, 471 b, 481 a, 481 b, 491 a, 491 b) compris par un premier corps mobile comprenant plusieurs noeuds aptes à émettre et/ou recevoir un signal par des moyens sans fil, le procédé étant **caractérisé en ce qu'**il comprend, pour au moins un premier noeud parmi lesdits noeuds, une étape de mesures de distances séparant ledit premier noeud de deuxièmes noeuds (451b, 453, 461b, 462a, 492a, 492b, 493a, 493b) en utilisant lesdits moyens sans fil, chacun desdits deuxièmes noeuds étant compris par l'une des entités suivantes de type distincts, au choix :

• le premier corps mobile (451, 461),
• un équipement fixe distant (443, 453) et situé à portée de transmission dudit corps mobile,
• un deuxième corps mobile (442, 462, 472, 482, 484, 492, 493) distant et situé à portée de transmission du premier corps mobile,

au moins deux noeuds parmi tous lesdits deuxièmes noeuds utilisés pour effectuer lesdites mesures de distance étant compris par deux entités de types distincts et/ou par ledit deuxième corps mobile (472, 492), le procédé comprenant une étape d'exploitation desdites mesures pour localiser au moins ledit premier noeud au moins relativement à un sous-ensemble desdits deuxièmes noeuds, le procédé comprenant en outre une étape de localisation d'au moins un autre (451 b, 461 b, 491 b) desdits noeuds (441 a, 441b, 451a, 461a, 471a, 471b, 481a, 481 b, 491 a, 491 b) compris par le corps en exploitant au moins une mesure de distance séparant cet autre noeud d'un troisième noeud (451a, 461a, 492a, 492b, 493a, 493b), ce troisième noeud pouvant être ledit premier noeud.

2. Procédé localisation coopérative selon la revendication 1, dans lequel une première étape (851) est exécutée pour mesurer des distances entre le premier noeud et des deuxièmes noeuds déjà positionnés et compris par des entités distantes du premier corps mobile, une deuxième étape (852) étant exécutée pour estimer la position dudit premier noeud à partir desdites mesures, une troisième étape (854) étant exécutée si la position dudit premier noeud n'a pas pu être déterminée selon la précision souhaitée à l'issue de la deuxième étape (852), la troisième étape (854) comprenant au moins une mesure de distance entre le premier noeud et au moins un autre noeud compris par le premier corps mobile et positionné à l'issue de la première étape (851), la position dudit premier noeud étant alors estimée à partir des mesures de distances issues de la première étape (851) et de la troisième étape (854).

3. Procédé localisation coopérative selon la revendication 1, dans lequel une première étape (1051, 1052, 1053) comprend la prise de mesures de distances entre le premier noeud et des deuxièmes noeuds, au moins un deuxième noeud étant compris par le premier corps mobile, au moins un autre deuxième noeud étant compris par une entité distante du premier corps mobile, le procédé exécutant une deuxième étape (1055) pour estimer la position du premier noeud à partir desdites mesures de distances.

4. Procédé localisation coopérative selon l'une quelconque des revendications précédentes, dans lequel on effectue au moins une mesure de temps de vol d'un trajet indirect de signal ultra large bande transmis entre le premier noeud (1802, 1902, 2002, 2102) et un deuxième noeud (1801, 1901, 1903, 2001, 2003, 2101, 2103, 2004), ledit trajet étant issu d'une unique réflexion, entre le premier noeud et le deuxième noeud, sur une surface (1840, 1940, 2040, 2140) externe au corps comprenant le premier noeud, le deuxième noeud étant compris, au choix, par :

o le premier corps mobile (1800, 1900, 2000, 2110) ;
o un équipement fixe (2130) distant et situé à portée de transmission dudit corps mobile ;
o un deuxième corps mobile (2120) distant et situé à portée de transmission du premier corps mobile ;

exploiter ladite mesure de temps de vol pour localiser le premier noeud au moins par rapport au deuxième noeud.

5. Procédé selon l'une quelconque des revendications précédentes, dans lequel les mesures de distances sont effectuées par mesure du temps d'arrivée d'un signal transmis entre le premier noeud et un deuxième noeud, le premier noeud et le deuxième noeud étant synchronisés, ou d'un échange de signaux transmis entre le premier noeud et un deuxième noeud, le premier noeud et le deuxième noeud étant asynchrones.

6. Procédé de localisation coopérative d'un corps mobile, le procédé comprenant, pour plusieurs noeuds dudit corps, une première étape de localisation coopérative de noeud selon l'une quelconque des revendications 1 à 5, pour estimer la position desdits noeuds, et une deuxième étape d'exploitation desdites positions pour localiser ledit corps mobile.

7. Système apte à la mise en oeuvre du procédé selon l'une quelconque des revendications 1 à 6, le système comprenant un premier corps mobile (501, 701) comprenant plusieurs noeuds parmi lesquels au moins un noeud (E, E/R) est apte à émettre des signaux, par exemple un émetteur radiofréquence ultra large bande, ledit noeud (E, E/R) étant à portée de transmission d'au moins un deuxième noeud (511, 512, 513, 514, 711, 712, 713, 714) comprenant un récepteur apte à recevoir les signaux émis par ledit émetteur, le premier corps mobile comprenant des moyens de calcul d'une position du noeud émetteur.

8.  Système apte à la mise en oeuvre du procédé selon l'une quelconque des revendications 1 à 6, le système comprenant un premier corps mobile (501, 701) comprenant plusieurs noeuds parmi lesquels au moins un noeud (R, E/R) est apte à recevoir des signaux, par exemple un récepteur radiofréquence ultra large bande, ledit noeud (R, E/R) étant à portée de transmission d'au moins un deuxième noeud (611, 612, 613, 614, 711, 712, 713, 714) comprenant un émetteur de signaux, le système comprenant des moyens de calcul de la position du noeud récepteur.

**Patentansprüche**

1.  Verfahren zur kooperativen Ortung einer Vielzahl von Knoten (441a, 441b, 451a, 461a, 471a, 471b, 481a, 481b, 491a, 491b) in einem ersten mobilen Körper, mehrere Knoten umfassend, die imstande sind, durch drahtlose Mittel ein Signal zu senden und/oder zu empfangen, wobei das Verfahren **dadurch gekennzeichnet ist, dass** es bei Nutzung der drahtlosen Mittel für mindestens einen ersten Knoten der Knoten einen Messschritt der Abstände umfasst, die den ersten Knoten von zweiten Knoten (451b, 453, 461b, 462a, 492a, 492b, 493a, 493b) trennen, wobei jeder der zweiten Knoten in einer der folgenden Einheiten unterschiedlichen Typs wahlweise enthalten ist in:

    dem ersten mobilen Körper (451, 461),
    einer entfernten stationären Ausrüstung (443, 453), die sich in Übertragungsreichweite des mobilen Körpers befindet,
    einem entfernten zweiten mobilen Körper (442, 462, 472, 482, 484, 492, 493), der sich in Übertragungsreichweite des ersten mobilen Körpers befindet,
    wobei mindestens zwei Knoten aller zweiten Knoten, die zur Durchführung der Abstandsmessungen verwendet werden, in zwei Einheiten unterschiedlichen Typs und/oder in dem zweiten mobilen Körper (472, 492) enthalten sind, wobei das Verfahren einen Nutzungsschritt der Messungen umfasst, um mindestens den ersten Knoten mindestens relativ zu einer Untergruppe der zweiten Knoten zu orten, wobei das Verfahren ferner einen Ortungsschritt mindestens eines anderen (451b, 461b, 491b) der Knoten (441a, 441b, 451a, 461a, 471a, 471b, 481a, 481b, 491a, 491b) in dem Körper durch Nutzung mindestens einer Messung des Abstands umfasst, der diesen anderen Knoten von einem dritten Knoten (451a, 461a, 492a, 492b, 493a, 493b) trennt, wobei dieser dritte Knoten der erste Knoten sein kann.

2.  Verfahren zur kooperativen Ortung nach Anspruch 1, wobei ein erster Schritt (851) durchgeführt wird, um Abstände zwischen dem ersten Knoten und zweiten Knoten, die bereits positioniert sind und in entfernten Einheiten des ersten mobilen Körpers enthalten sind, zu messen, wobei ein zweiter Schritt (852) durchgeführt wird, um die Position des ersten Knotens mit Hilfe der Messungen zu bestimmen, wobei ein dritter Schritt (854) durchgeführt wird, wenn die Position des ersten Knotens nach Abschluss des zweiten Schritts (852) nicht mit der gewünschten Präzision bestimmt werden konnte, wobei der dritte Schritt (854) mindestens eine Abstandsmessung zwischen dem ersten Knoten und mindestens einem anderen Knoten, der in dem ersten mobilen Körper enthalten ist und nach Abschluss des ersten Schritts (851) positioniert wurde, umfasst, wobei die Position des ersten Knotens dann mit Hilfe von Abstandsmessungen nach Abschluss des ersten Schritts (851) und des dritten Schritts (854) bestimmt wird.

3.  Verfahren zur kooperativen Ortung nach Anspruch 1, wobei ein erster Schritt (1051, 1052, 1053) das Durchführen von Abstandsmessungen zwischen dem ersten Knoten und zweiten Knoten umfasst, wobei mindestens ein zweiter Knoten im ersten mobilen Körper enthalten ist, wobei mindestens ein anderer zweiter Knoten in einer entfernten Einheit des ersten mobilen Körpers enthalten ist, wobei das Verfahren einen zweiten Schritt (1055) durchführt, um die Position des ersten Knotens mit Hilfe der Abstandsmessungen zu bestimmen.

4.  Verfahren zur kooperativen Ortung nach einem der vorangehenden Ansprüche, wobei mindestens eine Flugzeitmessung eines indirekten Wegs eines Ultrabreitbandsignals durchgeführt wird, das zwischen dem ersten Knoten (1802, 1902, 2002, 2102) und einem zweiten Knoten (1801, 1901, 1903, 2001, 2003, 2101, 2103, 2004) übertragen wird, wobei der Weg Ergebnis einer einzigen Reflexion zwischen den ersten Knoten und dem zweiten Knoten auf einer Fläche (1840, 1940, 2040, 2140) ist, die dem Körper extern ist, der den ersten Knoten enthält, wobei der zweite Knoten wahlweise enthalten ist in:

    dem ersten mobilen Körper (1800, 1900, 2000, 2110),
    einer entfernten stationären Ausrüstung (2130), die sich in Übertragungsreichweite des mobilen Körpers befindet,
    einem entfernten zweiten mobilen Körper (2120), der sich in Übertragungsreichweite des ersten mobilen Körpers befindet,
    wobei die Flugzeitmessung verwendet wird, um den ersten Knoten mindestens im Verhältnis zum zweiten Knoten zu orten.

5. Verfahren nach einem der vorangehenden Ansprüche, wobei die Abstandsmessungen durch Messung der Ankunftszeit eines Signals durchgeführt werden, das zwischen dem ersten Knoten und einem zweiten Knoten übertragen wird, wobei der erste Knoten und der zweiten Knoten synchronisiert sind, oder einem Austausch von Signalen, die zwischen dem ersten Knoten und einem zweiten Knoten übertragen werden, wobei der erste Knoten und der zweite Knoten asynchron sind.

6. Verfahren zur kooperativen Ortung eines mobilen Körpers, wobei das Verfahren für mehrere Knoten des Körpers einen ersten kooperativen Knotenortungsschritt nach einem der Ansprüche 1 bis 5 umfasst, um die Position der Knoten zu bestimmen, und einen zweiten Positionsnutzungsschritt, um den mobilen Körper zu orten.

7. System, das zur Umsetzung des Verfahrens nach einem der Ansprüche 1 bis 6 imstande ist, wobei das System einen ersten mobilen Körper (501, 701) umfasst, der mehrere Knoten umfasst, von denen mindestens ein Knoten (E, E/R) imstande ist, Signale zu senden, wie beispielsweise ein Ultrabreitband-Funkfrequenzsender, wobei der Knoten (E, E/R) in Übertragungsreichweite mindestens eines zweiten Knotens (511, 512, 513, 514, 711, 712, 713, 714) ist, der einen Empfänger umfasst, der imstande ist, die von dem Sender gesendeten Signale zu empfangen, wobei der erste mobile Körper Berechnungsmittel einer Position des Sendeknoten umfasst.

8. System, das zur Umsetzung des Verfahrens nach einem der Ansprüche 1 bis 6 imstande ist, wobei das System einen ersten mobilen Körper (501, 701) umfasst, der mehrere Knoten umfasst, von denen mindestens ein Knoten (R, E/R) imstande ist, Signale zu empfangen, wie beispielsweise ein Ultrabreitband-Funkfrequenzempfänger, wobei der Knoten (R, E/R) in Übertragungsreichweite mindestens eines zweiten Knotens (611, 612, 613, 614, 711, 712, 713, 714) ist, der einen Signalsender umfasst, wobei das System Berechnungsmittel der Position des Empfangsknotens umfasst.

**Claims**

1. A method for the cooperative localization of a plurality of nodes (441a, 441b, 451a, 461a, 471a, 471b, 481a, 481b, 491a, 491b comprised by a first mobile body comprising several nodes capable of transmitting and/or receiving a signal by wireless means, the method being **characterized in that** it comprises, for at least a first node among said nodes, a step for measuring distances separating said first node from second nodes (451b, 453, 461b, 462a, 492a, 492b, 493a, 493b) by using said wireless means, each of said second nodes being comprised by one of the following entities of different types, as chosen:

    the first mobile body (451, 461),
    remote fixed equipment (443, 453) situated within transmission range of said mobile body,
    a second remote mobile body (442, 462, 472, 482, 484, 492, 493) situated within transmission range of the first mobile body,
    at least two nodes from among all of said second nodes used to perform said distance measurements being comprised by two entities of different types and/or by said second mobile body (472, 492), the method comprising a step for exploiting said measurements to localize at least said first node at least relative to a subset of said second nodes, the method further comprising a step for the localization of at least one other (451b, 461b, 491b) of said nodes (441a, 441b, 451a, 461a, 471a, 471b, 481a, 481b, 491a, 491b) comprised by the body by exploiting at least one distance measurement separating that other node from a third node (451a, 461a, 492a, 492b, 493a, 493b), said third node being able to be said first node.

2. The cooperative localization method according to claim 1, wherein a first step (851) is carried out to measure distances between the first node and second nodes already positioned and comprised by entities remote from the first mobile body, a second step (852) being carried out to estimate the position of said first node from said measurements, a third step (854) being carried out if the position of said first node was not able to be determined with the desired precision after the second step (852), the third step (854) comprising at least one distance measurement between the first node and at least one other node comprised by the first mobile body and positioned at the end of the first step (851), the position of said first node then being estimated from distance measurements coming from the first step (851) and the third step (854).

3. The cooperative localization method according to claim 1, wherein a first step (1051, 1052, 1053) comprises taking distance measurements between the first node and second nodes, at least one second node being comprised by the first mobile body, at least one other second node being comprised by an entity remote from the first mobile body, the method carrying out a second step (1055) in order to estimate the position of the first node from said distance measurements.

4. The cooperative localization method according to any one of the preceding claims, wherein at least one measurement of the flight time of an indirect path of an ultra-wideband signal transmitted between the first node (1802, 1902, 2002, 2102) and a second node (1801, 1901, 1903, 2001, 2003, 2101, 2103, 2004), said path coming from a single reflection, between the first node and the second node, on a surface (1840, 1940, 2040, 2140) outside the body comprising a first node, the second node being comprised, as chosen, by:

the first mobile body (1800, 1900, 2000, 2110); remote fixed equipment (2130) situated within transmission range of said mobile body; a second, remote mobile body (2120) situated within transmission range of the first mobile body; exploiting said flight time measurement to localize the first node at least relative to the second node.

5. The method according to any one of the preceding claims, wherein the distance measurements are done by measuring the arrival time of a signal transmitted between the first node and a second node, the first node and the second node being synchronous, or an exchange of signals transmitted between the first node and a second node, the first node and the second node being asynchronous.

6. A method for the cooperative localization of a mobile body, the method comprising, for several nodes of said body, a first step for cooperative localization of the node according to any one of claims 1 to 5, in order to estimate the position of said nodes, and a second step for exploiting said positions in order to localize said mobile body.

7. A system capable of carrying out the method according to any one of claims 1 to 6, the system comprising a first mobile body (501, 701) comprising several nodes, among which at least one node (E, E/R) is able to transmit signals, for example an ultra-wideband radio frequency transmitter, said node (E, E/R) being within transmission range of at least one second node (511, 512, 513, 514, 711, 712, 713, 714) comprising a receiver capable of receiving the signals transmitted by said transmitter, the first mobile body comprising means for computing a position of the transmitted node.

8. A system capable of carrying out the method according to any one of claims 1 to 6, the system comprising a first mobile body (501, 701) comprising several nodes, among which at least one node (R, E/R) is capable of receiving signals, for example an ultra-wideband radio frequency receiver, said node (R, E/R) being within transmission range of at least one second node (611, 612, 613, 614, 711, 712, 713, 714) comprising a signal transmitter, the system comprising means for computing the position of the receiving node.

FIG.1a

FIG.1b

FIG.2

FIG.3a

FIG.3b

FIG.4a    FIG.4b    FIG.4c

441

443

441a

441b

442

442a

## FIG.4-1

451

453

451a

451b

## FIG.4-2

461

462

461a

462a

461b

## FIG.4-3

FIG.4-4

FIG.4-5

491

492

491a

492a

491b

492b

FIG.4-6

491

492

491a

492a

491b

492b

FIG.4-7

493

491

492

493a

491a

492a

493b

491b

492b

FIG.4-8

FIG.5

FIG.6

FIG.7

FIG.8a

851

851a

851b

852

853

854

855

860

FIG.8b

FIG.9a

FIG.10a

FIG.9b

FIG.10b

FIG.11

FIG.12a

FIG.12b

FIG.12c

FIG.12d

FIG.13a

FIG.13b

FIG.13c

FIG.13d

1511

1501 | TOA₁ ... TOA_n | 1502 → (x, y, z)

**FIG.14**

1600

1601 → 1602 → 1603 → 1604 → 1606 | TOA₁ / TOA₂

1603 → 1605 → 1607 | Data

1604 → 1605

**FIG.15**

**FIG.16**

FIG.17a

FIG.17b

FIG.18a

FIG.18b

FIG.19

FIG.20a

FIG.20b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080268873 A
- WO 2004095714 A
- EP 1207404 A
- US 20070225016 A
- US 20080232281 A
- US 20020055362 A

- US 20090209268 A
- WO 2008143379 A
- WO 2005096568 A
- US 20080077326 A
- US 20080223131 A
- WO 2007093641 A

**Littérature non-brevet citée dans la description**

- **N. PATWARI ; J.N. ASH ; S. KYPEROUNTAS ; A.O. HERO ; R.L. MOSES ; N.S. CORREAL.** Locating the nodes: coopérative localization in wireless sensor Networks. *Signal Processing Magazine,* Juillet 2005, vol. 22, 54-69
- **C.P. FIGUEIREDO ; N.S. DIAS ; P.M. MENDES.** 3D localization for biomedical wireless sensor networks using a microantenna. *Wireless Technology, 2008. EuWiT 2008. European Conference on,* 2008, 45-48
- **C. GUO ; J. WANG ; R.V. PRASAD ; M. JACOBS-SON.** Improving the Accuracy of Person Localization with Body Area Sensor Networks: An Experimental Study. *Consumer Communications and Networking Conference, 2009. CCNC 2009. 6th IEEE,* 2009, 1-5
- **H. REN ; M.Q. MENG ; L. XU.** Indoor Patient Position Estimation Using Particle Filtering and Wireless Body Area Networks. *Engineering in Medicine and Biology Society, 2007. EMBS 2007. 29th Annual International Conférence of the IEEE,* 2007, 2277-2280

- **C. LEE ; H. LEE ; J. KIM.** Performance of a one-way ranging method for WBAN healthcare services. *Communications and Information Technology, 2009. ISCIT 2009. 9th International Symposium on,* 2009, 1460-1463
- **F. CHITI ; R. FANTACCI ; F. ARCHETTI ; E. MESSINA ; D. TOSCANI.** An Integrated Communications Framework for Context Aware Continuous Monitoring with Body Sensor Networks. *IEEE Journal on Selected Areas in Communications,* Mai 2009, vol. 27 (4
- **M. MAMAN ; F. DEHMAS ; R. D'ERRICO ; L. OUVRY.** Evaluating a TDMA MAC for Body Area Networks Using a Space-time Dependent Channel Model. *The 20th Personal, Indoor and Mobile Radio Communications Symposium (PIMRC 2009),* Septembre 2009
- **J. HOGBORN.** Aperture Synthesis with a Non-Regular Distribution of Interferometer Baselines. *Astron. and Astrophys. Suppl. Ser,* 1974, vol. 15
- **D. MACAGNANO.** MAC Performances for Localization and Tracking in Wireless Sensor Networks. *Proceedings of the 4th Workshop on Positioning, Navigation and Communication (WPNC),* Mars 2007